# EUROPEAN PATENT APPLICATION

(11) **EP 1 253 578 A1**
(43) Date of publication of application: **30.10.2002**
(21) Application number: 01978901.5
(22) Date of filing: 25.10.2001
(51) Int. Cl.: G09G 5/00, G09G 3/36, G06F 3/153, G06F 13/28, G06F 13/36, H04N 7/24

(54) **IMAGE DISPLAY APPARATUS**

(30) Priority: 26.10.2000 JP 2000327261; 21.06.2001 JP 2001188725
(71) Applicant: MATSUSHITA ELECTRIC INDUSTRIAL CO., LTD., Kadoma-shi, Osaka 571-8501 (JP)
(72) Inventor: KAYADA, Tadashi, Kanazawa-ku, Yokohama-shi, Kanagawa 236- (JP); MACHIDA, Yutaka, Konan-ku, Yokohama-shi, Kanagawa 233-000 (JP); YUKITAKE, Takeshi, Asahi-ku, Yokohama-shi, Kanagawa 241-081 (JP); ITO, Hiroyuki, Tama-ku, Kawasaki-shi, Kanagawa 214-0032 (JP); KUBOTA, Kosuke, Yokosuka-shi, Kanagawa 239-0828 (JP); ABE, Koji, Yokosuka-shi, Kanagawa 238-0015 (JP); FUJIWARA, Yoji, Tsuzuki-ku, Yokohama-shi, Kanagawa 224-0 (JP)
(74) Representative: Grünecker, Kinkeldey, Stockmair & Schwanhäusser Anwaltssozietät
(86) International application number: JP0109369
(87) International publication number: WO02035512

(57) **Abstract**

Image de/coding unit 801 decodes coded image data and stores the image data on a temporary basis. Image address bus 123 and image data bus 124 connect image de/coding unit 801 and image display section 901. Image display section 901 stores image data like moving images in frame memory 914 which is a preexisting circuit, and displays the images that are for specified areas and that are produced in image de/coding unit 801 and previously produced images stored in frame memory 914 in overlap. By this means, it is possible to reduce the traffic on MPU (Micro Processor Unit) busses and to present large-volume image data such as moving images by relatively simple additions of functions.

## Description

### Technical Field

The present invention relates to an image display apparatus that is mounted with a micro processor and that displays images on liquid crystal matter.

### Background Art

In recent years, communication terminal apparatuses as typified by mobile phones have evolved with the expansion of image data such as from black-and-white images to color images, from small screens to large screens, and from still images to moving images.

One common method used with respect to communication terminal apparatuses up till this point is to mount an interface in an MPU (Micro Processor Unit) that controls over the entire apparatus and transfer pixels from the MPU to liquid crystal matter directly connected on a bus. Generally, the access speed during the writing of image data from an MPU into liquid crystal matter is lower than the access speed of an apparatus that is directly connected to a bus from an MPU such as memory. For this reason, with the above method it is difficult to present large-volume images on liquid crystal matter at a high speed. Also, in a mobile phone with simpler hardware configurations than a PC (personal computer), the traffic on a bus to the MPU increases dramatically when a large-volume image is transferred, and this results in a processing overload on the MPU.

In contrast, "A MPEG4 Programmable Codec DSP with an Embedded Pre/Post-processing Engine (IEEE 1999 Custom Integrated Circuits Conference)" discloses a structure that increases the access speed of the MPU and memory and enhances computation processing capability to handle large-volume data.

Also, displaying moving images on a liquid crystal display screen and the like requires a graphic combination function, which is a function to combine moving images, characters, and still images. As one technique with respect to graphic combination function, "TECHNICAL REPORT OF IEICE, ED99-61, SMD99-35, ICD-9943 (1999-06)" discloses to perform de/coding processing and graphic image presentation processing of images and to perform combining processing on moving images and graphics.

Nevertheless, because to increase the access speed of an MPU and memory, the clock signal speed needs also to be increased, and the power consumption of battery increases and has an adverse effect on the operation of the apparatus. Furthermore, performing graphic combination requires a memory to store image data that is to be combined as well as a memory to store combined image data. However, providing a processor for the sole use for moving image processing would as a consequence upsize the apparatus, which is inadequate for mobile phones with high demand for the miniaturization of the apparatus.

### Disclosure of Invention

An object of the present invention is to reduce the traffic on a bus to the MPU by relatively simple additions of functions without impairing display quality and to provide an image display apparatus that can present a large-volume image such as a moving image.

The above object can be achieved by disposing busses for the sole use for connecting liquid crystal'matter to a buffer that temporarily stores the image data to be displayed on this liquid crystal matter, by thus making it unnecessary to use the busses to the MPU when outputting image data from a buffer to liquid crystal matter, and by using memory on liquid crystal matter for graphic combination.

### Brief Description of Drawings

FIG.1 is a block diagram showing the configuration of an image display apparatus according to Embodiment 1 of the present invention;
FIG.2 is a timing diagram showing the operation of an image display apparatus according to Embodiment 1 of the present invention;
FIG.3 is a block diagram showing the configuration of an image display apparatus according to Embodiment 2 of the present invention;
FIG.4 is a timing diagram showing the operation of an image display apparatus according to Embodiment 2 of the present invention;
FIG.5 is a block diagram showing the configuration of an image display apparatus according to Embodiment 3 of the present invention;
FIG.6 is a timing diagram showing the operation of an image display apparatus according to Embodiment 3 of the present invention;
FIG.7 is a block diagram showing the configuration of an image display apparatus according to Embodiment 4 of the present invention;
FIG.8 is a block diagram showing the configuration of an image display apparatus according to Embodiment 5 of the present invention;
FIG.9 is a block diagram showing the configuration of an image display apparatus according to Embodiment 6 of the present invention;
FIG.10 is a drawing illustrating an example of a display screen in an image display apparatus according to Embodiment 6 of the present invention;
FIG.11 is a block diagram showing the configuration of an image display apparatus according to Embodiment 7 of the present invention;
FIG.12 is a timing diagram showing the operation of an image display apparatus according to Embodiment 7 of the present invention;
FIG.13 is a block diagram showing the configuration of an image display apparatus according to Embodiment 7 of the present invention;
FIG.14 is a block diagram showing the configuration of an image display apparatus according to Embodiment 8 of the present invention;
FIG.15 is a timing diagram showing the operation of an image display apparatus according to Embodiment 8 of the present invention;
FIG.16 is a drawing illustrating an example of a display screen in an image display apparatus according to Embodiment 8 of the present invention;
FIG.17 is a block diagram showing the configuration of an image display apparatus according to Embodiment 9 of the present invention;
FIG.18 is a block diagram showing the configuration of an image display apparatus according to Embodiment 10 of the present invention;
FIG.19 is a block diagram showing the configuration of an image display apparatus according to Embodiment 11 of the present invention;
FIG.20 is a drawing illustrating an example of a display screen in an image display apparatus according to Embodiment 11 of the present invention;
FIG.21 is a block diagram showing the configuration of an image display apparatus according to Embodiment 12 of the present invention;
FIG.22 is a block diagram showing the configuration of an image display apparatus according to Embodiment 13 of the present invention;
FIG.23 is a block diagram showing the configuration of an image display apparatus according to Embodiment 14 of the present invention;
FIG.24 is a timing diagram showing the operation of an image display apparatus according to Embodiment 14 of the present invention;
FIG.25 is a drawing representing the display screen in an image display apparatus according to Embodiment 14 of the present invention;
FIG.26 is a drawing representing memory in an image display apparatus according to Embodiment 14 of the present invention;
FIG.27 is a block diagram showing the configuration of an image display apparatus according to Embodiment 15 of the present invention;
FIG.28 is a timing diagram showing the operation of an image display apparatus according to Embodiment 15 of the present invention;
FIG.29 is a block diagram showing the configuration of an image display apparatus according to Embodiment 16 of the present invention;
FIG.30 is a timing diagram showing the writing and presentation timing in a conventional image display apparatus;
FIG.31 is a block diagram showing the configuration of an image display apparatus according to Embodiment 17 of the present invention;
FIG.32 is a timing diagram showing the writing and presentation timing in an image display apparatus according to Embodiment 17 of the present invention;
FIG.33 is a block diagram showing the configuration of an image display apparatus according to Embodiment 18 of the present invention;
FIG.34 is a drawing describing a modification in the alignment of image data by the bus width modifying section in an image display apparatus according to Embodiment 18 of the present invention;
FIG.35 is a block diagram showing the configuration of an image display apparatus according to Embodiment 19 of the present invention;
FIG.36 is a diagram showing correspondence in the number of colors between MPU-held image data and LCD input image data;
FIG.37 is a block diagram showing the configuration of an image display apparatus according to Embodiment 20 of the present invention; and,
FIG.38 is a block diagram showing the configuration of an image display apparatus according to Embodiment 21 of the present invention.

### Best Mode for Carrying Out the Invention

One method of reducing the power consumption in a mobile phone is to provide a memory on liquid crystal matter and to read out and display image data from this memory when no image updating is required such as during waiting periods. Also, to minimize the data volume upon displaying a moving image, portions like the background that do not change from previous images are not updated, and the image data in specific areas is updated and combined with previous images . The present inventors have arrived at this invention focusing on these points.

That is to say, the gist of the present invention is to output image data from a buffer that temporarily stores the image data on liquid crystal matter, by not using the busses to the MPU but by using other routes, and to use the memory on liquid crystal matter for graphic combination.

The embodiments of the present invention will be described in detail with reference to attached drawings.

### (Embodiment 1)

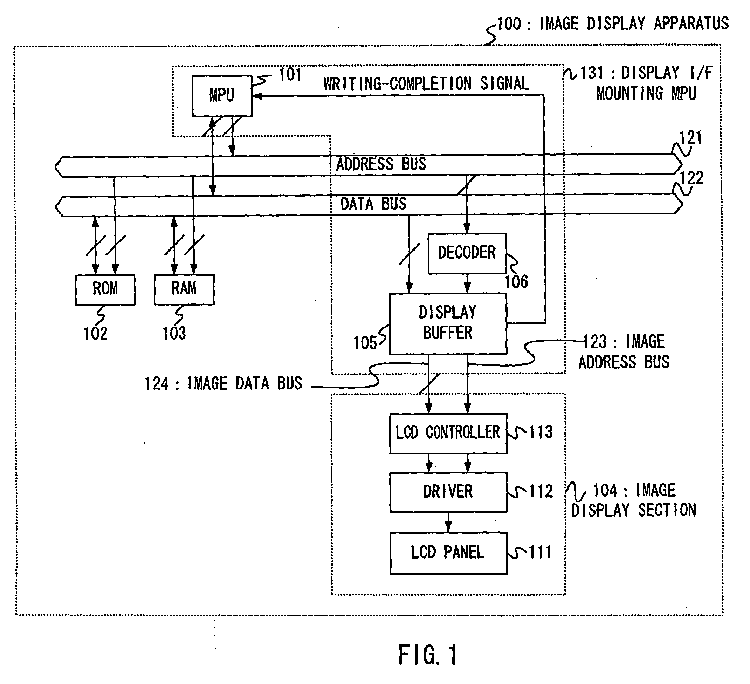

FIG.1 is a block diagram showing the configuration of an image display apparatus according to Embodiment 1 of the present invention. Image display apparatus 100 shown in FIG.1 comprises MPU 101 that controls image presentation, ROM 102 that stores the operating programs for MPU 101, RAM 103 that stores image data and the like to be displayed, image display section 104 that displays images produced in MPU 101, display buffer 105 that temporarily stores image data read out from RAM 103, and decoder 106 that selects addresses of display buffer 105.

Image display section 104 comprises LCD panel 111 that displays images, driver 112 that runs LCD panel 111, and LCD controller 113 that controls over image presentation on LCD panel 111.

In the image display apparatus shown in FIG.1, address bus 121 connects with MPU 101, ROM 102, RAM 103 and decoder 106, and write-signals that represent write-instructions and read-signals that represent read-instructions flow upon the bus . Data bus 122 connects with MPU 101, ROM 102, RAM 103 and display buffer 105, and image data and the like flow upon the bus . Hereinafter address bus 121 and data bus 122 will be uniformly referred to as "MPU busses."

Image address bus 123 connects display buffer 105 and LCD controller 113, and write-signals and the like flow upon the bus. Image data bus 124 connects display buffer 105 and LCD controller 113, and image data flows upon the bus. Hereinafter image address bus 123 and image data bus 124 will be uniformly referred to as "image-only busses."

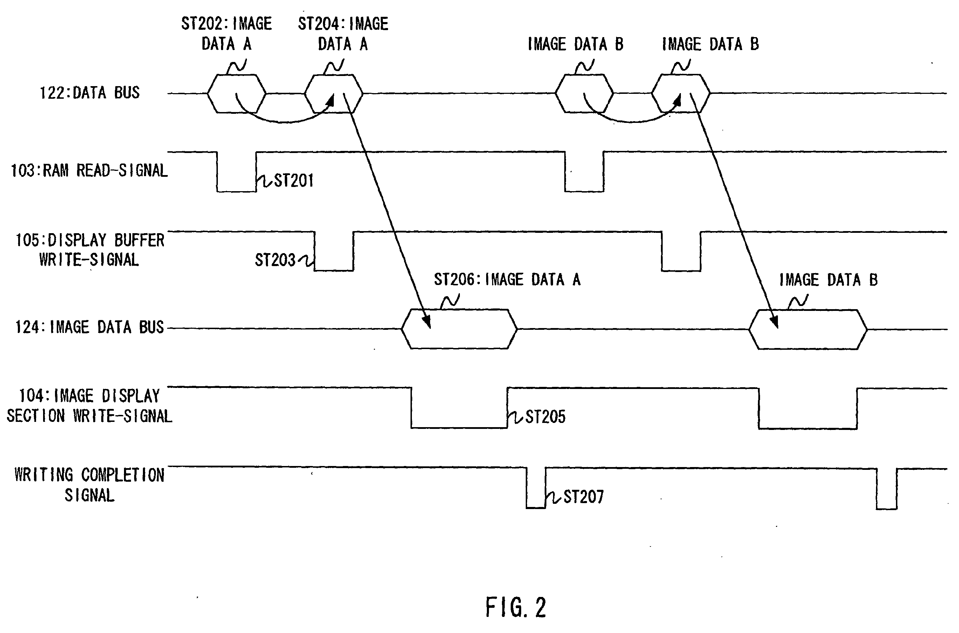

Next, the operation of image display apparatus 100 shown in FIG.1 will be described with the timing-diagram shown in FIG.2.

MPU 101 outputs a read-signal to ROM 102 via address bus 121 and reads out a program from ROM 102 via data bus 122. MPU 101 then produces image data based on the read program and stores the image data in RAM 103 via data bus 122.

To display image data on LCD panel 111 in image display section 104, MPU 101 outputs a read-signal to RAM 103 via address bus 121 (ST 201) and reads out image data A from RAM 103 (ST 202).

MPU 101 then outputs a read-signal to decoder 106 via address bus 121, and decoder 106 converts the read-signal into a write-signal, selects an address, and outputs the signal to display buffer 105 (ST 203). Image data A is written via data bus 122 into the address selected by decoder 106 of display buffer 105 (ST 204).

When image data A of one or more pixels is written, display buffer 105 outputs a write-signal to LCD controller 113 via image address bus 123 at the access timing of LCD controller 113 (ST 205) and writes the image data into LCD controller 113 via image data bus 124 (ST 206). Display buffer 105 then, upon completing the writing of image data A into LCD controller 113, outputs to MPU 101 a signal that indicates the completion of writing (hereinafter "writing completion signal") (ST 207).

After this, image display apparatus 100 repeats the operations of ST 201∼ST 207 with respect to following image data B.

By thus providing display buffer 105 that temporarily stores image data, and image-only busses that connect display buffer 105 and LCD controller 113 which is liquid crystal matter, it is possible to make the busses to MPU 101 stay open while image data is written from display buffer 105 into LCD controller 113, and to thus reduce the traffic from MPU 101 to LCD controller 113. As a result, while the busses to MPU 101 are open, MPU 101 can perform other processing such as producing subsequent image data by reading out programs from ROM 102.

Also, by integrating MPU 101, display buffer 105, and decoder 106 into a chip, it is possible to make display interface(I/F)-mounting MPU 131 and miniaturize the apparatus.

It is also possible, in case the data width in display section 104 is less than half the width of data bus 122, to divide image data into two or more in display buffer 105 and then write the image data into LCD controller 113. By this means it is possible to open up address bus 121 and data bus 122 to other processing and to write data of two or more pixels into LCD controller 113 by one access.

### (Embodiment 2)

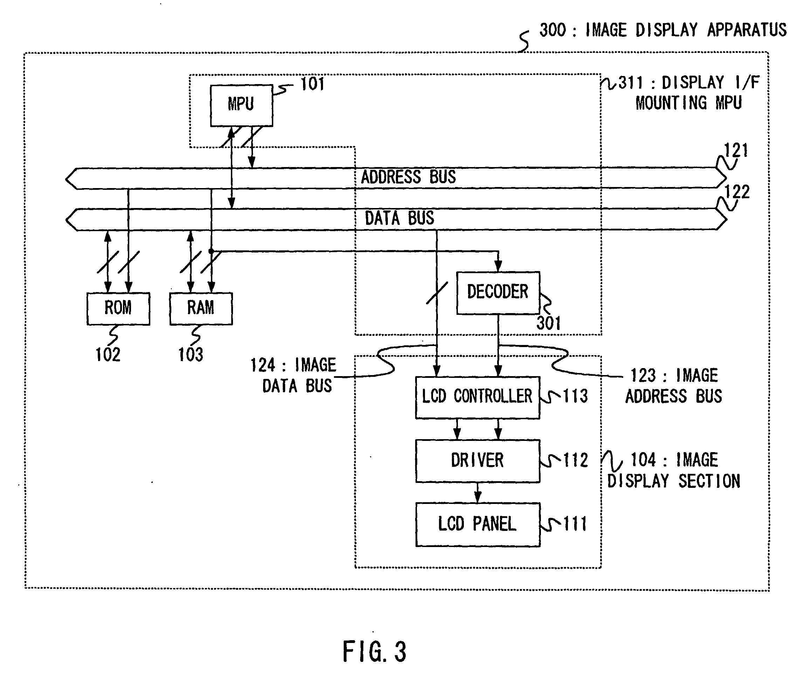

Fig.3 is a block diagram showing the configuration of an image display apparatus according to Embodiment 2 of the present invention . The sections that image display apparatus 300 shown in FIG.3 has in common with image display apparatus 100 shown in FIG.1 will be given the same numerals without further descriptions thereof.

In comparison with image display apparatus 100 shown in FIG.1, image display apparatus 300 shown in FIG.3 employs a configuration in which display buffer 105 and decoder 106 are removed and decoder 301 that selects addresses for LCD controller 113 is added.

Address bus 121 connects with MPU 101, ROM 102, and RAM 103, and a signal line from address bus 121 to RAM 103 splits and connects with decoder 106. Data bus 122 connects with MPU 101, ROM 102, and RAM 103. Image data bus 124 connects data bus 122 and LCD controller 113.

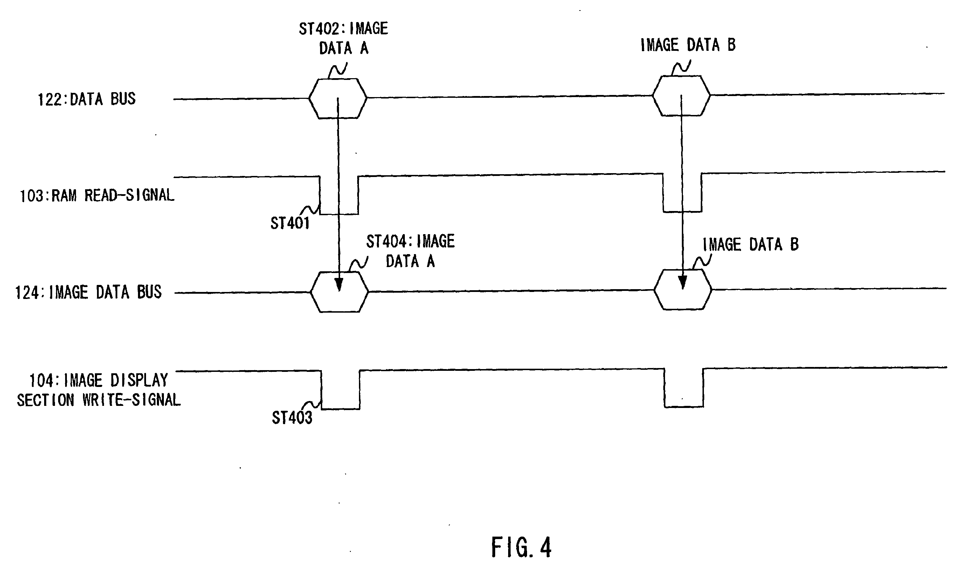

Next, the operation of image display apparatus 300 shown in FIG.3 will be described with reference to the timing diagram in FIG.4.

MPU 101 outputs a read-signal to ROM 102 via address bus 121 and reads out a program from ROM 102 via data bus 122. MPU 101 then produces image data based on the read program and stores the image data in RAM 103 via data bus 122.

To display image data on LCD panel 111 in image display section 104, MPU 101 outputs a read-signal to RAM 103 and to decoder 301 via address bus 121 and then reads out image data A from RAM 103 (ST 401, ST 402). Decoder 301 converts the read-signal into a write-signal and outputs the signal to LCD controller 113 (ST 403).

Image data A read out from RAM 103 is written via image data bus 124 into an address selected by decoder 301 of LCD controller 113 (ST 404).

After this, image display apparatus 300 repeats the operations of ST 401∼ST 404 with respect to following image data B.

By thus reading from RAM 103 and writing into LCD controller 113 simultaneously it is possible to implement image presentation by half the number of accesses compared to the past, and to thus reduce the traffic from MPU 101 to LCD controller 113.

Also, by integrating MPU 101, display buffer 105, and decoder 106 into a chip it is possible to make display interface(I/F)-mounting MPU 131 and miniaturize the apparatus.

### (Embodiment 3)

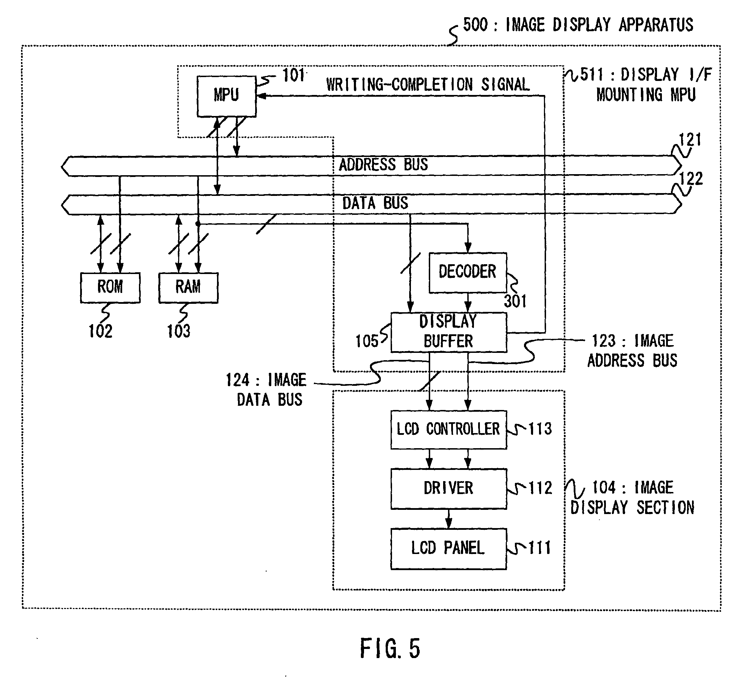

Embodiment 3 is a combination of the above Embodiment 1 and Embodiment 2. FIG.5 is a block diagram showing the configuration of an image display apparatus according to Embodiment 3 of the present invention. The sections that image display apparatus 500 shown in FIG.5 has in common with image display apparatus 100 shown in FIG.1 will be given the same numerals without further descriptions thereof.

In comparison with image display apparatus 100 shown in FIG.1, the difference with image display apparatus 500 shown in FIG.5 is that it comprises decoder 301 instead of decoder 106, and that a signal line from address bus 121 to RAM 103 splits and connects with decoder 301.

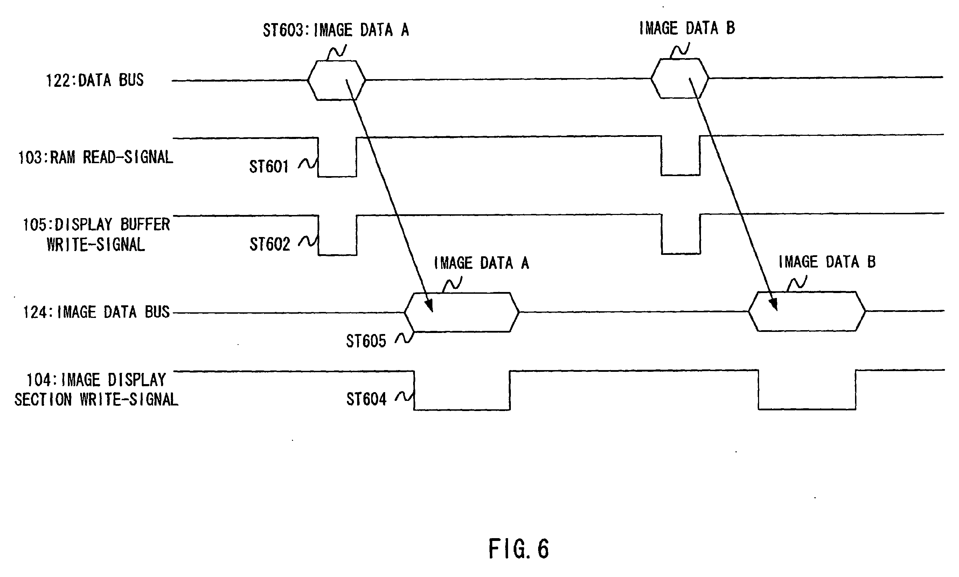

Next, the operation of image display apparatus 500 shown in FIG.5 will be described with the timing diagram shown in FIG.6.

MPU 101 outputs a read-signal to ROM 102 via address bus 121 and reads out a program from ROM 102 via data bus 122. MPU 101 then produces image data based on the read program and stores the image data in RAM 103 via data bus 122.

To display image data on LCD panel 111 in image display section 104, MPU 101 outputs a read-signal to RAM 103 and to decoder 301 via address bus 121 (ST 601). At the same time, decoder 301 converts the read-signal into a write-signal and outputs the signal to display buffer 105 (ST 602). Image data A is written via data bus 122 into an address selected by decoder 301 of display buffer 105 (ST 603).

When one or more pixel units of image data A is written, display buffer 105 outputs a write-signal to LCD controller 113 at the access timing of LCD controller 113 (ST 604), and writes the image data into LCD controller 113 via image data bus 124 (ST 605).

After this, image display apparatus 500 repeats the operations of ST 601∼ST 605 with respect to following image data B.

By this means it is possible to make address bus 121 and data bus 122 open to other processing while image data is written from display buffer 105 into LCD controller 113, and to implement image presentation by half the number of accesses compared to the past, and to thus reduce the traffic from MPU 101 to LCD controller 113.

Also by integrating MPU 101, display buffer 105, and decoder 301 into a chip, it is possible to make display interface(I/F)-mounting MPU 511 and miniaturize the apparatus.

### (Embodiment 4)

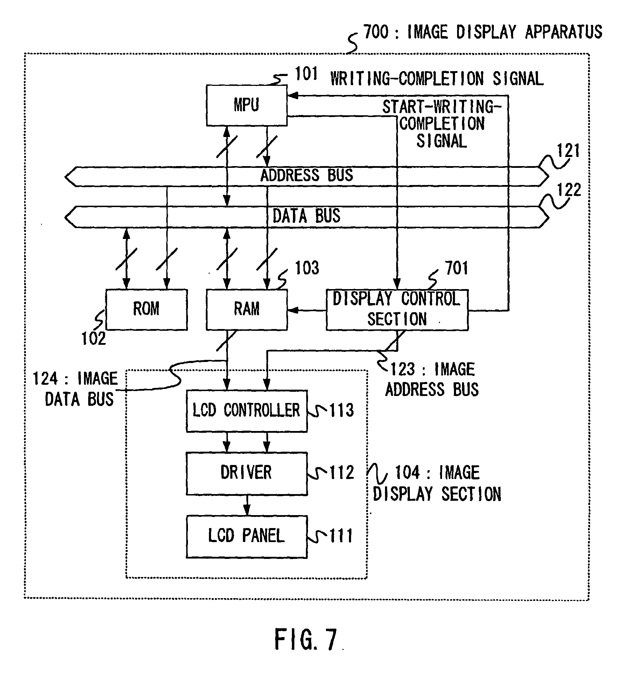

Fig.7 is a block diagram showing the configuration of an image display apparatus according to Embodiment 4 of the present invention. The sections that image display apparatus 700 shown in FIG.7 has in common with image display apparatus 100 shown in FIG.1 will be given the same numerals without further descriptions thereof.

In comparison with image display apparatus 100 shown in FIG.1, image display apparatus 700 shown in FIG.7 employs a configuration in which display buffer 105 and decoder 106 are removed and display control section 701 is added.

Address bus 121 connects with MPU 101, ROM 102, and RAM 103, and data bus 122 connects with MPU 101, ROM 102, and RAM 103. Image data bus 124 connects RAM 103 and LCD controller 113.

MPU 101 outputs a signal that instructs to start writing image data (hereinafter "start-writing-instruction signal") to display control section 701.

Upon receiving a start-writing-instruction signal, display control section 701 outputs a read-signal to RAM 103 and a write-signal to LCD controller 113. Display control section 701 then, when a predetermined volume such as one screen of data is read out from RAM 103 and written into LCD controller 113, outputs a writing-completion signal to MPU 101.

By thus providing display control section 701 and controlling data from the point of reading out data from RAM 103 to the point of writing the data into LCD controller 113 without involving MPU 101, it is possible to reduce the traffic on the busses involved in image presentation by MPU 101, and to thus reduce the processing load on MPU 101 in image presentation processing.

### (Embodiment 5)

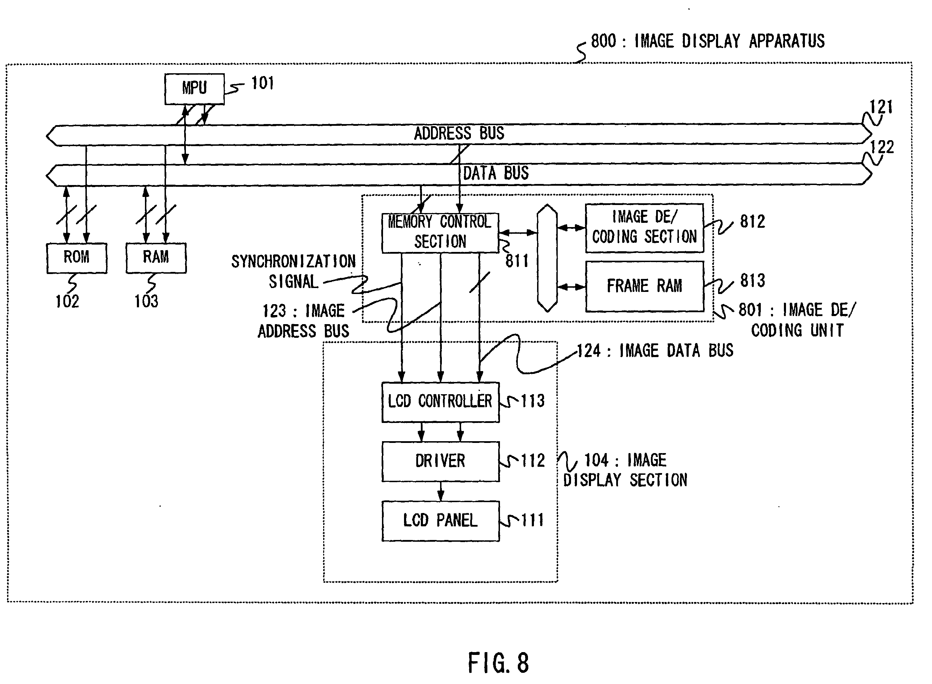

Fig.8 is a block diagram showing the configuration of an image display apparatus according to Embodiment 5 of the present invention . The sections that image display apparatus 800 shown in FIG.8 has in common with image display apparatus 100 shown in FIG.1 will be given the same numerals without further descriptions thereof.

In comparison with image display apparatus 100 shown in FIG.1, image display apparatus 800 shown in FIG.8 employs a configuration in which display buffer 105 and decoder 106 are removed and image de/coding unit 801 is added. Image de/coding unit 801 comprises memory control section 811, image de/coding section 812, and frame RAM 813.

Address bus 121 connects with MPU 101, ROM 102, and RAM 103, and memory control section 811, while data bus 122 connects with MPU 101, ROM 102, and RAM 103, and memory control section 811.

Furthermore, image address bus 121 and image data bus 124 connect memory control section 811 and LCD controller 113.

MPU 101 outputs a signal that instructs to start decoding processing (hereinafter "start-decoding-instruction signal") to memory control section 811 via address bus 121.

Memory control section 811 has frame memory inside and temporarily stores the image data coded in JPEG or M-PEG4 or the like, and, for example upon storing one screen of image data, outputs the image data to image de/coding section 812 in accordance with a start-writing-instruction signal. Also, memory control section 811 outputs image data stored in frame RAM 813 to LCD controller 113 in synch with the access timing of LCD controller 113 via image data bus 124.

Image de/coding section 812 decodes image data coded in JPEG or M-PEG4 or the like and writes the data into frame RAM 813. Frame RAM 813 stores the image data decoded in image de/coding section 812 and outputs the image data to memory control section 811.

By thus providing image de/coding unit 801 and writing decoded image data into LCD controller 113 via image data bus 124, it is possible to present data, in particular coded data such as moving images, on image display section 104 without monopolizing data bus 121, and to thus reduce the processing load on the overall apparatus.

Incidentally, it is possible to arrange image de/coding unit 801 with a DSP (Digital Signal Processor) and thus miniaturize the apparatus.

It is also possible that memory control section 811 synchronizes a screen of data with vertical synchronization signals and outputs each pixel to image display section 104 in synch with write-signals, and image display section 901 presents images on LCD panel 111 in synch with vertical synchronization signals, horizontal synchronization signals, and with write-signals. By this means, the display operates in synch with continuously-output images like moving images and the like, which makes it possible to perform image presentation whereby the re-writing on the display screen is invisible, and to thus offer high-quality images.

### (Embodiment 6)

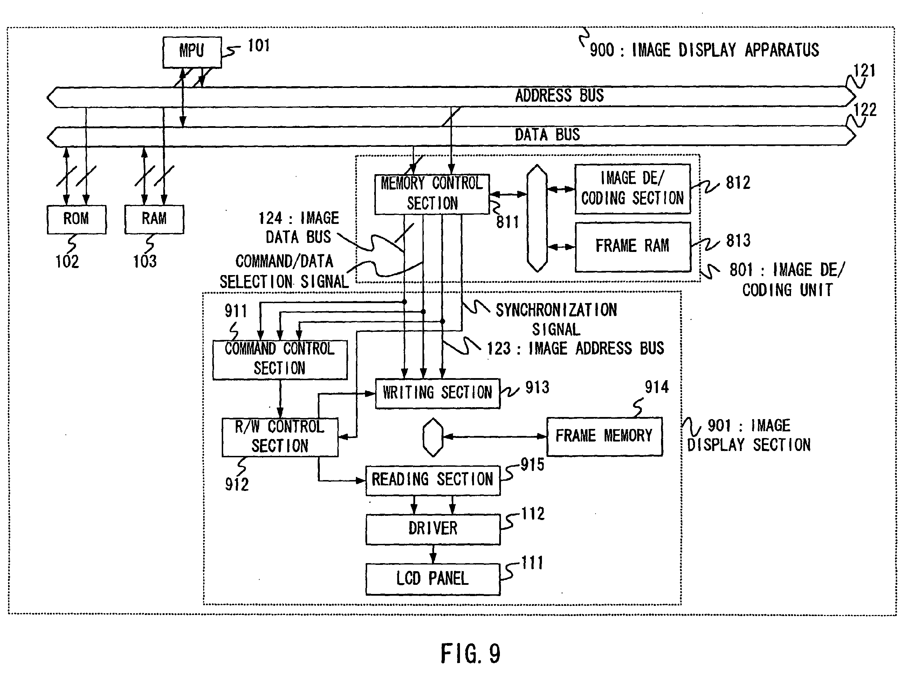

Fig.9 is a block diagram showing the configuration of an image display apparatus according to Embodiment 6 of the present invention. The sections that image display apparatus 900 shown in FIG.9 has in common with image display apparatus 800 shown in FIG.8 will be given the same numerals without further descriptions thereof.

In comparison with image display apparatus 800 shown in FIG.8, the difference with image display apparatus 900 shown in FIG.9 is in the internal configuration of image display section 901 that differs from image display section 104.

In comparison with image display section 104, image display section 901 employs a configuration in which LCD controller 113 is removed and command control section 911, R/W section 912, writing section 913, frame memory 914, and reading section 915 are added. Incidentally, frame memory 914 is a preexisting circuit used to store the image data displayed during the memory-waiting periods.

Image de/coding unit 801 discerns a specified area that MPU 101 specifies for updating, and stores in frame 813 the image data which is in the specified areas and which is smaller in the number of pixels compared to image display section 901. Memory control section 811 also outputs a command/data selection signal that determines whether the data to be written into a liquid crystal module is a command to control liquid crystal matter or image data to be displayed on liquid crystal matter.

Command control section 911 interprets an input command and sets a control signal that meets the command in R/W control section 912. For instance, when a command to specify a particular area is transmitted, command control section 911 interprets the command and informs R/W section 912 of the area on a display screen for next presentation.

R/W control section 912, based on the image presentation area specified for instance by command control section 911, recognizes that data transmitted from data bus 122 is for the specified area, and controls over writing section 913 and reading section 915. Furthermore, R/W control section 912 performs functions such as adjusting the timing for reading and writing from/in frame memory.

Writing section 913 writes into frame memory 914 the image data input from image data bus 124 in accordance with a write-signal input from image address bus 123.

Frame memory 914 temporarily stores image data to be written into a liquid crystal module. Normally, in a liquid crystal module, it is required to output image data to liquid crystal matter at predetermined intervals to refresh data on a liquid crystal panel. On the other hand, image data from MPU 101 is written on an irregular basis, and so frame memory 914 performs a function whereby the written data is temporarily stored in frame memory 914 and then read out on a regular basis from frame memory 914 to liquid crystal matter.

Reading section 915 performs reading control to read out image data from frame memory 914, as well as writing control to write the read-out image data into a liquid crystal module.

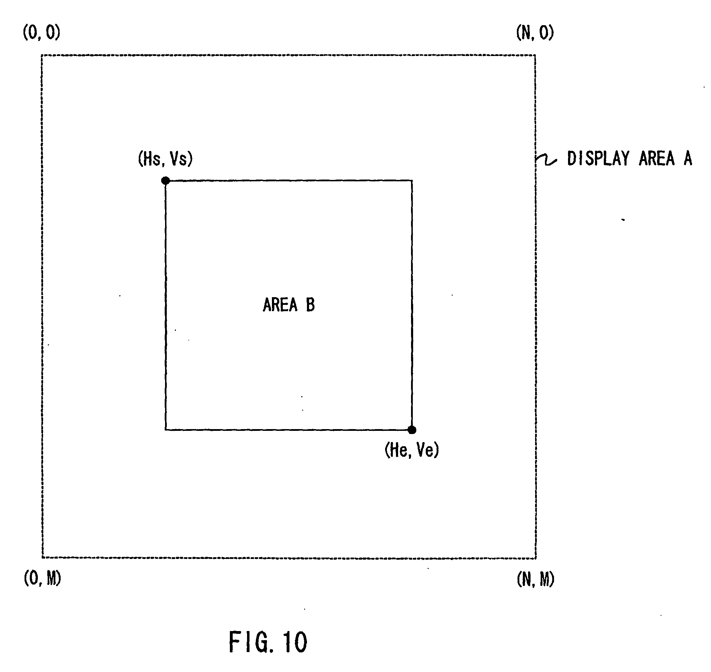

FIG.10 shows an example of a display screen in image display apparatus 900. In FIG.10, area A, which occupies the entire screen, consists of N×M pixels, and an coordinate upper left thereto is (0, 0) and an coordinate lower right thereto is (N, M). When writing a new image into area B in FIG. 10, image display section 901 interprets a command that specifies a start-point coordinate (Hs, Vs) and an end-point coordinate (He, Ve) on a raster scan and presents the image data over area B on LCD panel 111.

By thus storing image data in preexisting circuit frame memory 914 and superposing images for specific areas produced in image de/coding unit 801, and previously produced images, that is to say, by using memory on liquid crystal matter for graphic combination, it is possible to present a large-volume image such as a moving image at a high-speed by relatively simple additions of functions, and to thus reduce the cost. Similarly, with the data flowing on data bus 122 decreasing in volume, it is possible to reduce the traffic on the busses involved in image presentation by MPU 101. Furthermore, it is possible to miniaturize the apparatus by reducing the memory size of frame RAM 813.

It is also possible that memory control section 811 synchronizes a screen of data with vertical synchronization signals and outputs individual pixels to image display section 104 in synch with write-signals, and image display section 901 presents images on LCD panel 111 in synch with vertical synchronization signals, horizontal synchronization signals, and with write-signals. By this means, the display operates in synch with continuously-output images like moving images and the like, which makes it possible to perform image presentation whereby the re-writing on the display screen is invisible, and to thus offer high-quality images.

### (Embodiment 7)

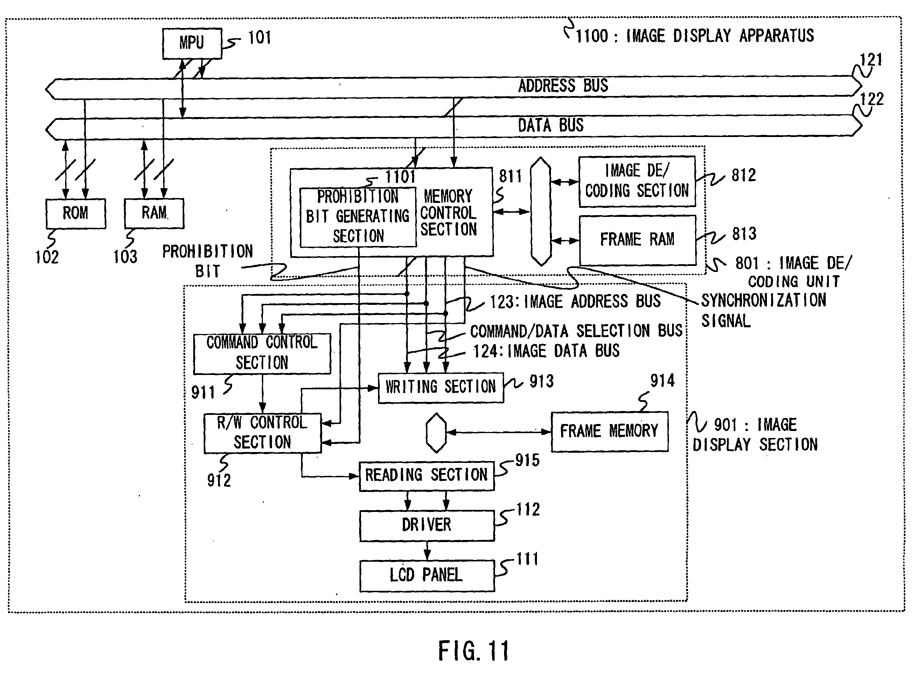

Fig.11 is a block diagram showing the configuration of an image display apparatus according to Embodiment 7 of the present invention. The sections that image display apparatus 1100 shown in FIG.11 has in common with image display apparatus 900 shown in FIG.9 will be given the same numerals without further descriptions thereof.

In comparison with image display apparatus 900 shown in FIG.9, the difference with image display apparatus 1100 shown in FIG.11 is that it has prohibition bit generating section 1101 inside memory control section 811.

Following the instructions from MPU 101, prohibition bit generating section 1101 outputs to image display section 901 a prohibition bit that prohibits the update of the areas that do not update the display.

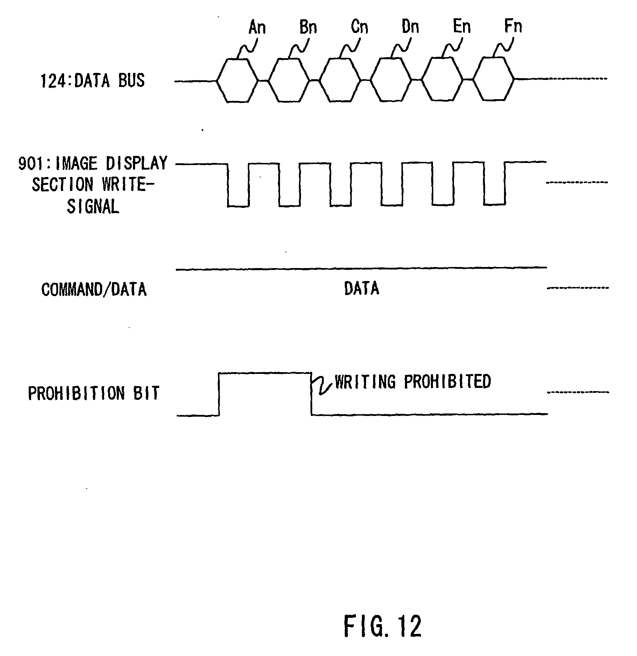

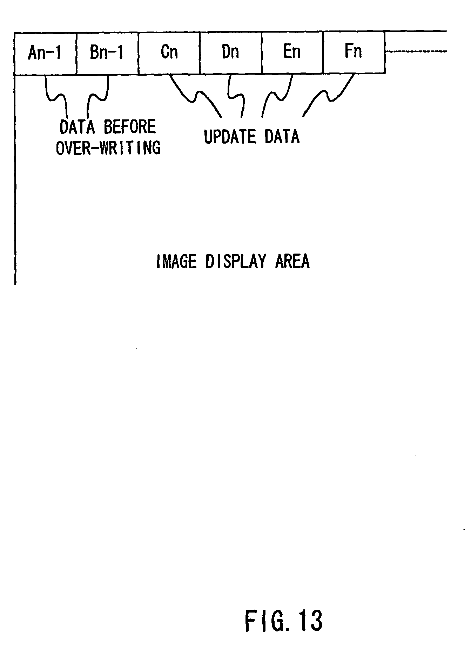

FIG.12 is a timing-diagram showing the operation of the image display apparatus 1100 shown in FIG. 11. FIG. 13 illustrates an example of a display screen in image display apparatus 1100 in the case represented by FIG.12.

Assuming that in FIG.12 An and Bn are pixels that do not perform updating, memory control section 811, upon outputting An and Bn to image display section 901, sets prohibition bits enabled. Image display section 901 does not update the pixels with enabled prohibition bits.

By thus outputting prohibition bits from memory control section 811 to image display section 901, it is possible, in addition to that memory on liquid crystal matter can be used for graphic combination, that in image display section 901, images can be updated only in certain areas, while full-display output is in progress. Similarly, with the data flowing on data bus 122 decreasing in volume, it is possible to reduce the traffic on the busses involved in image presentation by MPU 101.

It is also possible that memory control section 811 synchronizes a screen of data with vertical synchronization signals and outputs individual pixels to image display section 104 in synch with write-signals, and image display section 901 presents images on LCD panel 111 in synch with vertical synchronization signals, horizontal synchronization signals, and with write-signals. By this means, the display operates in synch with continuously-output images like moving images and the like, which makes it possible to perform image presentation whereby the re-writing on the display screen is invisible, and to thus offer high-quality images.

### (Embodiment 8)

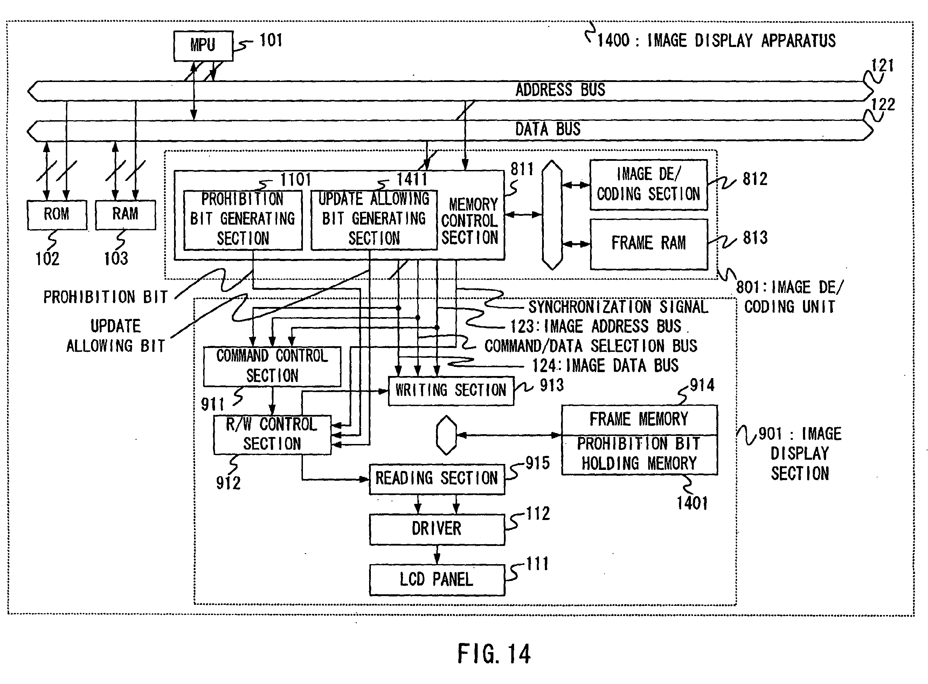

FIG.14 is a block diagram showing the configuration of an image display apparatus according to Embodiment 8 of the present invention. The sections that image display apparatus 1400 shown in FIG.14 has in common with image display apparatus 1100 shown in FIG.11 will be given the same numerals without further descriptions thereof.

In comparison with image display apparatus 1100 shown in FIG.11, image display apparatus 1400 shown in FIG.14 employs a configuration in which prohibition bit holding memory 1401 is added inside image display section 901 and update allowing bit generating section 1411 is added inside memory control section 811.

Following the instructions from MPU 101, update allowing bit generating section 1411 outputs to image display section 901 an update allowing bit that indicates as to whether or not the updating of prohibition bits should be allowed. When an update allowing bit that instructs to the effect of disallowing the updating of a prohibition bit is input, image display section 901 displays previously displayed image data with respect to the area that is specified by the prohibition bit held by prohibition bit holding memory 1401.

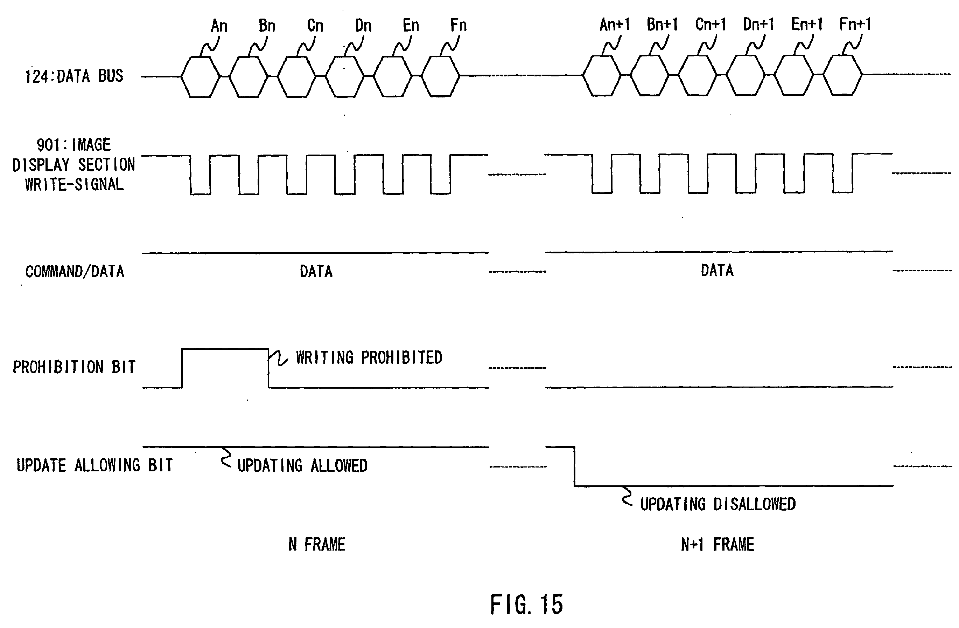

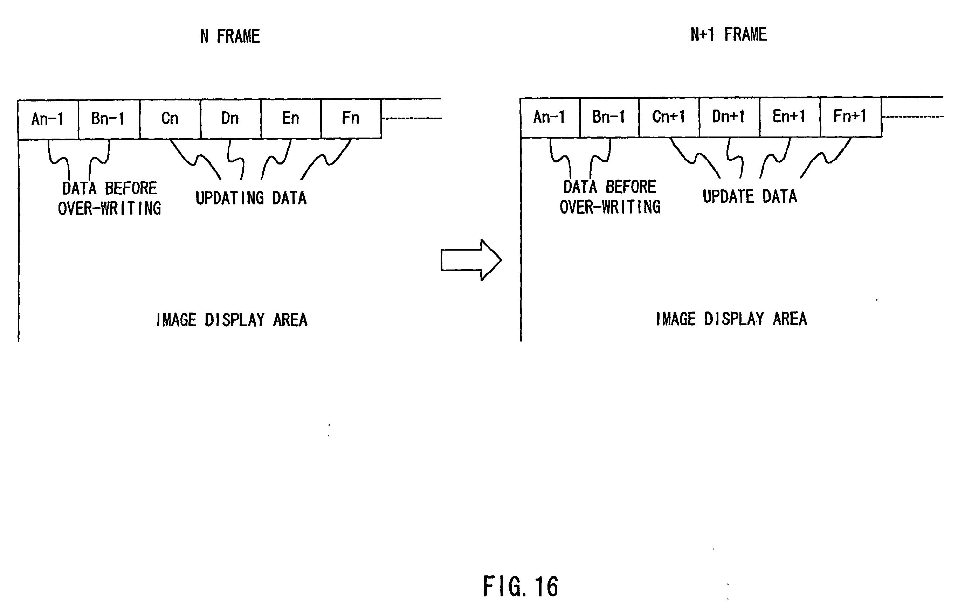

FIG.15 is a timing diagram showing the operation of an image display apparatus 1400 shown in FIG.14. FIG. 16 illustrates an example of a display screen in image display apparatus 1400 in the case represented by FIG.15.

In FIG.15, prohibition bits are enabled when An and Bn are output to image display section 901 in the Nth frame, and prohibition bits are not enabled in the N+1th frame. In this case, holding prohibition bits in prohibition bit holding memory 1401 in the Nth frame, image display section 901 does not update pixels An and Bn that are not updated by prohibition bits as shown in FIG.16.

With image display section 901 thus holding prohibition bits, it is possible to reduce the number of times to generate prohibition bits, and to thus reduce the power consumption, in addition to the effect by Embodiment 7.

It is also possible that memory control section 811 synchronizes a screen of data with vertical synchronization signals and outputs individual pixels to image display section 104 in synch with write-signals, and image display section 901 presents images on LCD panel 111 in synch with vertical synchronization signals, horizontal synchronization signals, and with write-signals. By this means, the display operates in synch with continuously-output images like moving images and the like, which makes it possible to perform image presentation whereby the re-writing on the display screen is invisible, and to thus offer high-quality images.

### (Embodiment 9)

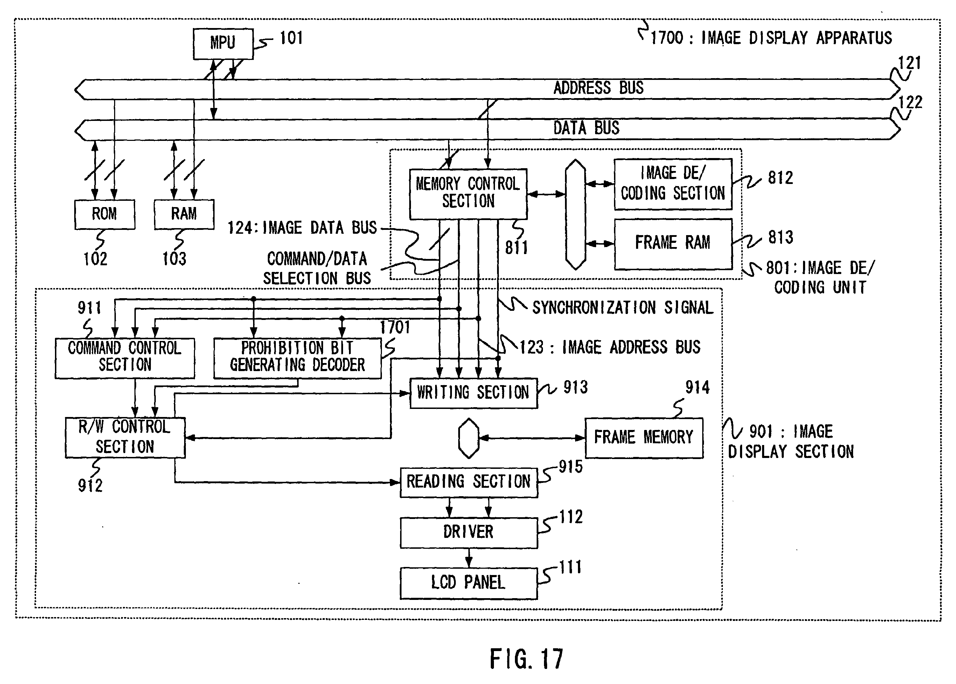

Fig.17 is a block diagram showing the configuration of an image display apparatus according to Embodiment 9 of the present invention. The sections that image display apparatus 1700 shown in FIG.17 has in common with image display apparatus 900 shown in FIG.9 will be given the same numerals without further descriptions thereof.

In comparison with image display apparatus 900 shown in FIG.9, image display apparatus 1700 shown in FIG.17 employs a configuration in which prohibition bit generating decoder 1701 is added inside image display section 901.

With this embodiment, update prohibiting image data is defined with, for instance, 12-bit image data "000000000000," instead of using prohibition bits as described with Embodiment 7, and prohibition bit generating decoder 1701 generates prohibition bits when update prohibiting image data is input and outputs the prohibition bits to R/W control section 912.

By this means the same effect as Embodiment 7 can be achieved. It is also possible to achieve the same effect as Embodiment 8 by additionally introducing holding memory 1401 shown in FIG.14 to image display apparatus 1700 shown in FIG. 17, and by outputting update allowing bits to image display section 901 from memory control section 811.

It is also possible that memory control section 811 synchronizes a screen of data with vertical synchronization signals and outputs individual pixels to image display section 104 in synch with write-signals, and image display section 901 presents images on LCD panel 111 in synch with vertical synchronization signals, horizontal synchronization signals, and with write-signals. By this means, the display operates in synch with continuously-output images like moving images and the like, which makes it possible to perform image presentation whereby the re-writing on the display screen is invisible, and to thus offer high-quality images.

### (Embodiment 10)

Embodiment 10 has a structure that combines above Embodiment 1 and Embodiment 5 to switch paths for writing into an LCD controller depending on non-coded image data and coded image data.

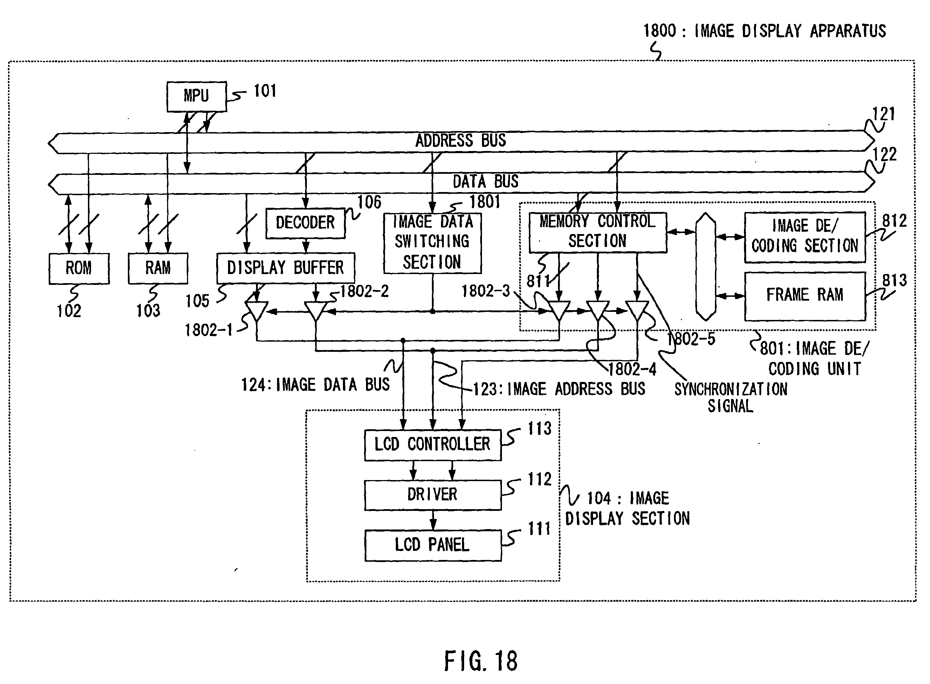

FIG.18 is a block diagram showing the configuration of an image display apparatus according to Embodiment 10 of the present invention. The sections that image display apparatus 1800 shown in FIG.18 has in common with image display apparatus 100 and 800 shown in FIG.s.1 and 8 will be given the same numerals without further descriptions thereof.

In comparison with image display apparatus 100 shown in FIG.1, image display apparatus 1800 shown in FIG.18 employs a configuration in which image de/coding unit 801 shown in FIG.8, image data switching section 1801, and tri-state buffers 1802-1 to 1802-5 are added.

By controlling tri-state buffers 1802-1 to 1802-5, image switching section 1801 displays non-coded data on image display section 104 via display buffer 105, and coded image data on image display section 104 via image de/coding unit 801.

By thus switching writing paths by image data switching section 1801, it is possible to present both coded image data and non-coded image data on image display section 104 without monopolizing data bus 121, and to thus reduce the processing load on the overall image display apparatus.

Image display apparatus 1800 may mount image data switching section 1801 inside memory control section 811.

Also, by integrating MPU 101, display buffer 105, and decoder 106 into a chip, it is possible to make display interface(I/F)-mounting MPU 131, as in Embodiment 1.

It is also possible to divide image data into two or more in display buffer 105 and write the data into LCD controller 113, in case the data width in display section 104 is less than half of the width of data bus 122.

By employing a configuration in which display buffer 105 and decoder 106 are removed and decoder 3 shown in FIG.3 is added, the image display apparatus shown in FIG.18 achieves the same effect as Embodiment 2 in terms of displaying non-coded image data such as graphic data.

By employing a configuration in which a signal line from address bus 121 to RAM 103 splits and connects with decoder 106 as shown in FIG.5, the image display apparatus shown in FIG.18 achieves the same effect as Embodiment 3 in terms of displaying non-coded image data such as graphic data.

Furthermore, by employing a configuration in which display buffer 105 and decoder 106 are removed and display control section 701 is added as shown in FIG.7, the image display apparatus shown in FIG.18 achieves the same effect as Embodiment 4 in terms of displaying non-coded image data such as graphic data.

Also, by halting the power and clock signal supplied to image de/coding unit 801 while no image data is output from image de/coding unit 801, it is possible to reduce the power consumption. One of the methods to implement this halting of a power supply and clock signal is to halt the power and clock signal supplied to the LSI from outside in case image de/coding unit 801 is a single LSI, or to provide a gate mechanism that halts a power supply and clock signal within the LSI.

### (Embodiment 11)

Embodiment 11 is a structure that combines above Embodiment 6 and Embodiment 10 to switch paths for writing into an LCD controller depending on non-coded image data and coded image data, and that furthermore updates specified areas only.

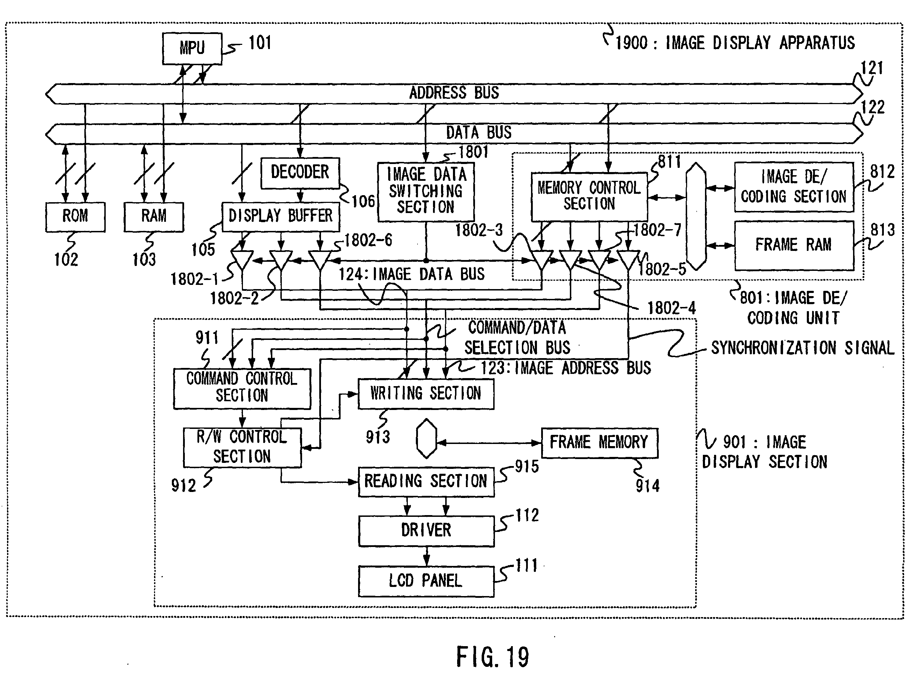

FIG.19 is a block diagram showing the configuration of an image display apparatus according to Embodiment 11 of the present invention. The sections that image display apparatus 1900 shown in FIG.19 has in common with image display apparatus 1800 shown in FIG.18 will be given the same numerals without further descriptions thereof.

In comparison with image display apparatus 1800 shown in FIG.18, image display apparatus 1900 shown in FIG.19 employs a configuration in which image display section 901 shown in FIG.9 is added in place of image display section 104. Image data switching section 1801 controls tri-state buffers 1802-1 to 1802-7.

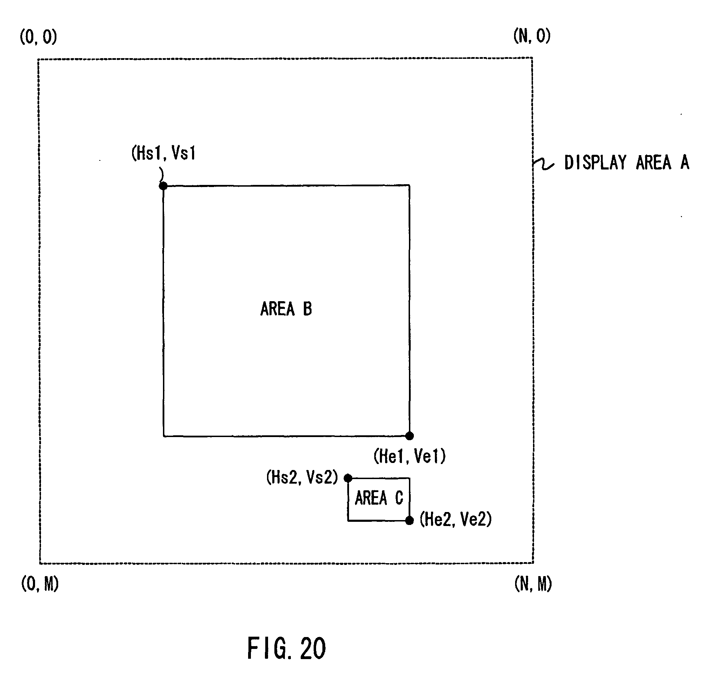

FIG.20 shows an example of a display screen in image display section 1900. For instance, with the first frame, image display section 901 presents the image data output from display buffer 105 on LCD panel 111 over the full display area A, which is (0, 0) to (N, M). Image display section 901 then interprets a command to the effect that area B for image presentation by a second frame is (Hsl, Vsl) to (Hel, Vel), and presents the image data output from image de/coding unit 801 over area B on LCD panel 111. Furthermore, image display section 901 interprets a command to the effect that area c for image presentation by a third frame is (Hs2, Vs2) to (He2, Ve2), and presents the image data output from display buffer 105 over area C on LCD panel 111.

By thus switching writing paths with image data switching section 1801, it is possible to present both coded image data and non-coded image data on image display section 104 without monopolizing data bus 121, and to thus reduce the processing load on the overall image display apparatus. Also by thus storing image data in frame memory 914, which is a preexisting circuit, and by superposing the image which is in a special area and which is produced in image de/coding unit 801, and a previously produced image, it is possible to thus use memory on liquid crystal matter for graphic combination. Accordingly, it is possible to present an image obtained by combining both coded image data and non-coded image data at a high-speed by relatively simple additions of functions, which also makes possible a reduction in the cost.

It is also possible that memory control section 811 synchronizes a screen of data with vertical synchronization signals and outputs individual pixels to image display section 104 in synch with write-signals, and image display section 901 presents images on LCD panel 111 in synch with vertical synchronization signals, horizontal synchronization signals, and with write-signals. By this means, the display operates in synch with continuously-output images like moving images and the like, which makes it possible to perform image presentation whereby the re-writing on the display screen is invisible, and to thus offer high-quality images.

By additionally introducing prohibition bit generating section 1101 shown in FIG.11, and by outputting prohibition bits from memory control section 811 to image display section 901, it is further possible to achieve the same effect as Embodiment 7.

By additionally introducing holding memory 1401 and update allowing bit generating section 1411 shown in FIG.14 to image display apparatus shown in FIG.19, and by outputting update allowing bits from memory control section 811 to image display section 901, it is further possible to achieve the same effect as Embodiment 8.

By additionally introducing prohibition bit generating decoder 1701 shown in FIG.17 to image display apparatus 1900 shown in FIG.19, and by outputting update prohibition image data from memory control section 811 to image display section 901, it is further possible to achieve the same effect as Embodiment 9.

### (Embodiment 12)

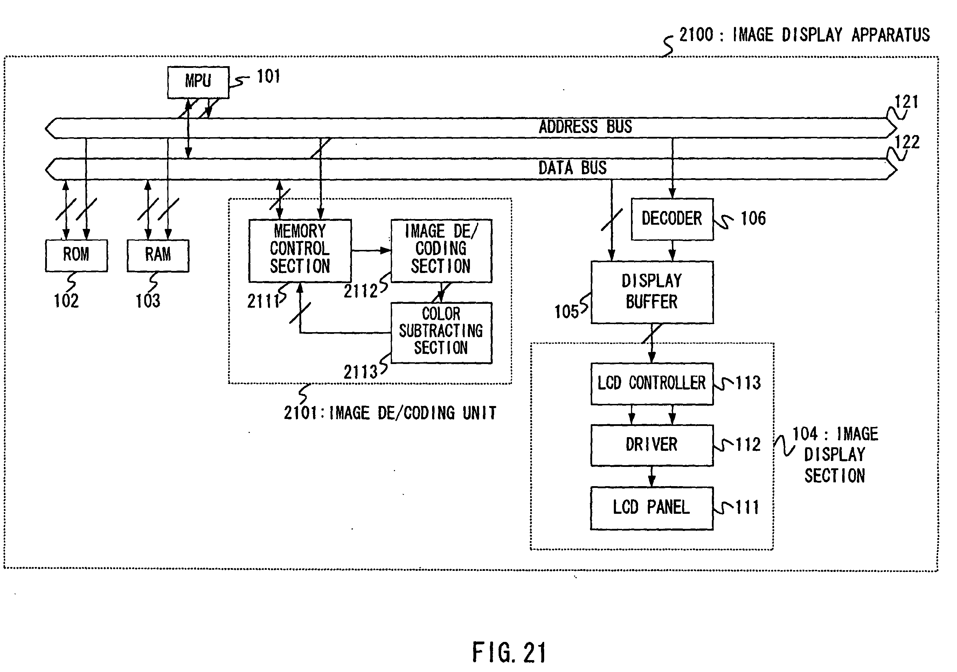

FIG.21 is a block diagram showing the configuration of an image display apparatus according to Embodiment 12 of the present invention. The sections that image display apparatus 2100 shown in FIG.21 has in common with image display apparatus 100 shown in FIG.1 will be given the same numerals without further descriptions thereof.

In comparison with image display apparatus 100 shown in FIG.1, image display apparatus 2100 shown in FIG.21 employs a configuration in which image de/coding unit 2101 is added. Image de/coding unit 2101 comprises memory control section 2111, image de/coding section 2112, and color subtracting section 2113.

Address bus 121 connects with MPU 101, ROM 102, RAM 103, decoder 106, and memory control section 2111. Data bus 122 connects with MPU 101, ROM 102, RAM 103, display buffer 105, and memory control section 2111.

Memory control section 2111 temporarily stores the image data coded in JPEG or M-PEG4 in internal memory to output to image de/coding section 2112, and further temporarily stores the image data output from color subtracting section 2113 to output to MPU 101 via data bus 122 in accordance with a read-signal.

Image de/coding section 2112 decodes the image data coded in JPEG or in M-PEG4 and outputs the image data to color subtracting section 2113.

Color subtracting section 2113 performs color subtracting processing on the data output from image de/coding section 2112 to give the image data a bit width required to be displayed on image display section 104, and outputs the image data to memory controlling section 2111.

For instance, provided that the original number of bits per pixel in decoded image data is 8 for red, green, and blue each, and is 24 in total (full-color) and that the bit number in image display section 104 is 8 bits, image de/coding section 2101 subtracts color from decoded 24-bit image down to 8-bit image immediately after decoding, and stores the image in the internal memory of memory control section 2111. Thereafter, image de/coding unit 2101 writes two pixels of data into display buffer 105 via data bus 122 using a 16-bit bus.

By thus subtracting color from decoded image data, the traffic on the MPU busses can be reduced by large.

### (Embodiment 13)

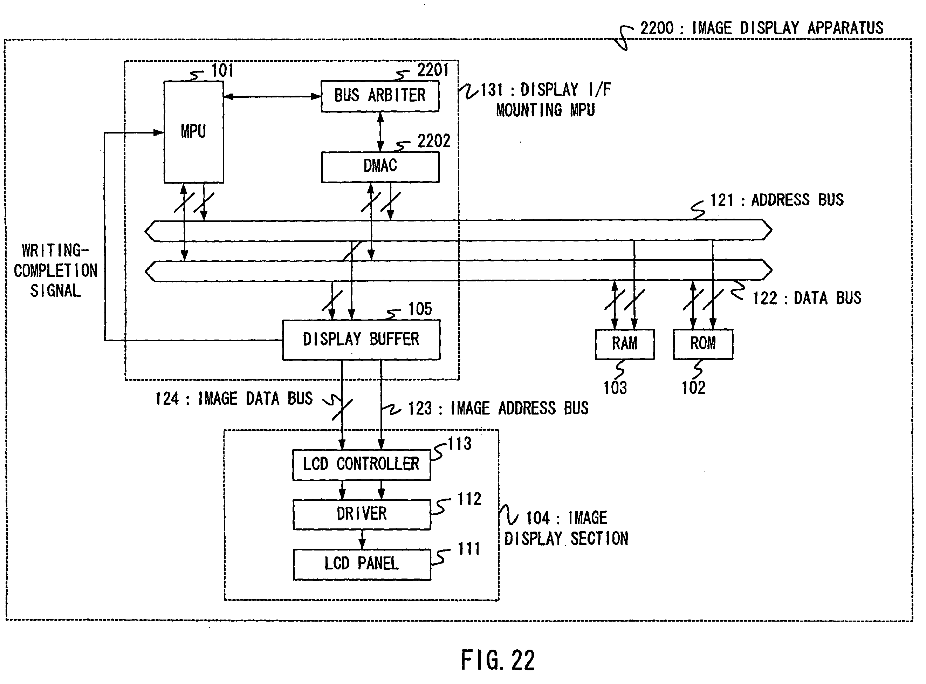

FIG.22 is a block diagram showing the configuration of an image display apparatus according to Embodiment 13 of the present invention. The sections that image display apparatus 2200 shown in FIG.22 has in common with image display apparatus 100 shown in FIG.1 will be given the same numerals without further descriptions thereof.

In comparison with image display apparatus 100 shown in FIG.1, image display apparatus 2200 shown in FIG.22 employs a configuration in which bus arbiter 2201 and DMAC (Display Dynamic Memory Access Controller) 2202 are added.

Address bus 121 and data bus 122 each connect with MPU 101, ROM 102, RAM 103, display buffer 105, and DMAC 2202.

In image display apparatus 2200 shown in FIG.22, what can be a master to control the access to address bus 121 and data bus 122 are MPU 101 and DMAC 2202. Bus arbiter 2201 arbitrates the right to use the busses in each individual circumstance with respect to MPU 101 and DMAC 2202. For instance, with DMAC 2202 given a higher priority right to the use over MPU 101, and when both MPU 101 and DMAC 2202 send bus arbiter 2201 a request to use the busses, bus arbiter 2201 arbitrates such that DMAC will be given priority to the uses of the busses.

Upon obtaining the bus-use right from bus arbiter 2201, DMAC 2202 autonomously controls over address bus 121 and data bus 122, reads out image data from RAM 103 and writes the image data into image display buffer 105.

Thus with DMAC 2202, it is possible to exchange data between an input/output apparatus and memory without the MPU, and to thus increase the data transmission speed and reduce the load on the MPU.

### (Embodiment 14)

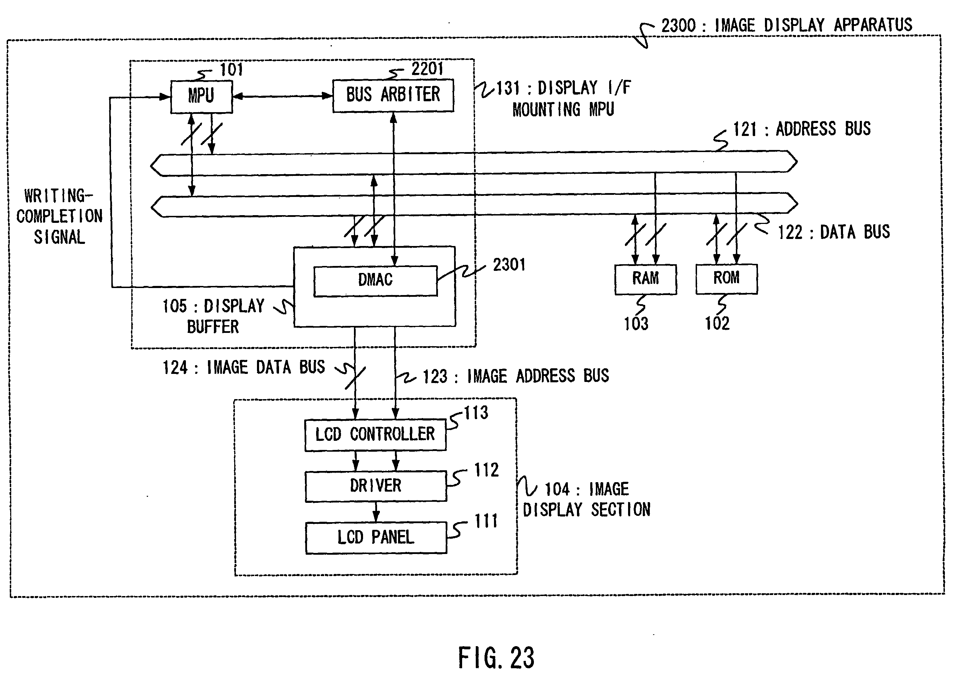

FIG.23 is a block diagram showing the configuration of an image display apparatus according to Embodiment 14 of the present invention. The sections that image display apparatus 2300 shown in FIG.23 has in common with image display apparatus 2200 shown in FIG.22 will be given the same numerals without further descriptions thereof.

In comparison with image display apparatus 2200 shown in FIG.22, image display apparatus 2300 shown in FIG.23 employs a configuration in which DMAC 2202 is removed and DMAC 2301 is added inside display buffer 105.

Address bus 121 and data bus 122 each connect with MPU 101, ROM 102, RAM 103, and display buffer 105.

DMAC 2301 is included in display buffer 105 and, upon obtaining the bus-use right from bus arbiter 2201, autonomously controls over address bus 121 and data bus 122 and reads out image data from RAM 103.

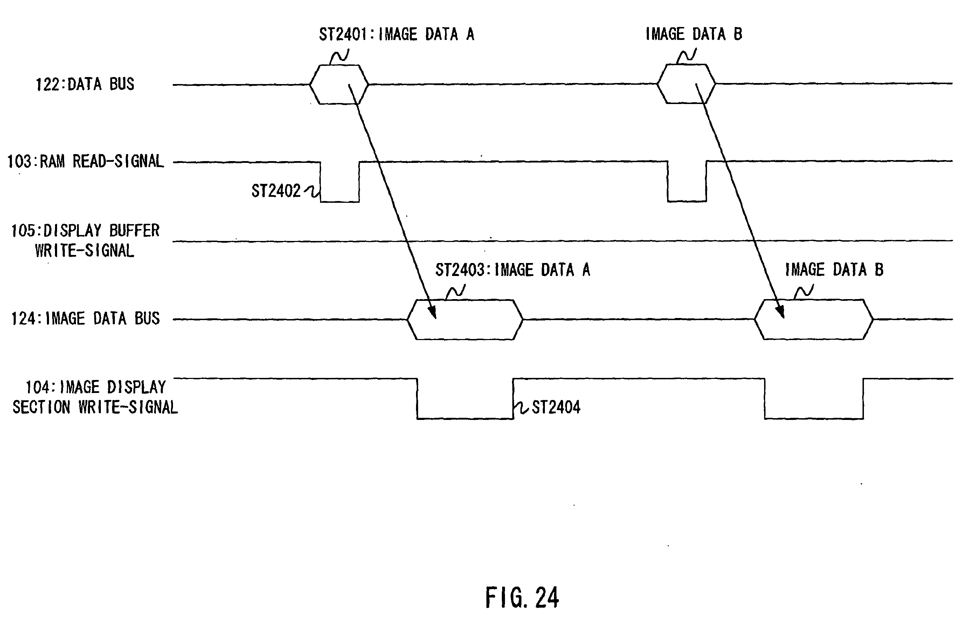

Next, the operation of image display apparatus 2300 shown in FIG.23 will be described with the timing diagram shown in FIG.24.

MPU 101 outputs a read-signal to ROM 102 via address bus 121 and reads out a program from ROM 102 via data bus 122. MPU 101 then produces image data based on the read program and stores the image data in RAM 103 via data bus 122.

To display image data on LCD panel 111 in image display section 104, DMAC 2301 outputs a read-signal to RAM 103 via address bus 121 and reads out image data A from RAM 103 (ST 2401, ST 2402).

Image data A read out from RAM 103 is written into an address selected by DMAC 2301 in display buffer 105 via image data bus 124 (ST 2403, ST 2404).

After this, image display apparatus 2300 repeats the operations of ST 2401∼ST 2404 with following image data B.

By thus including DMAC 2301 in display buffer 105 it is possible to read out from RAM 103 and write into display buffer 105 in one step, and to thus perform data transmission at a higher speed than Embodiment 13 that requires two steps of reading out from RAM 103 and writing into buffer 105.

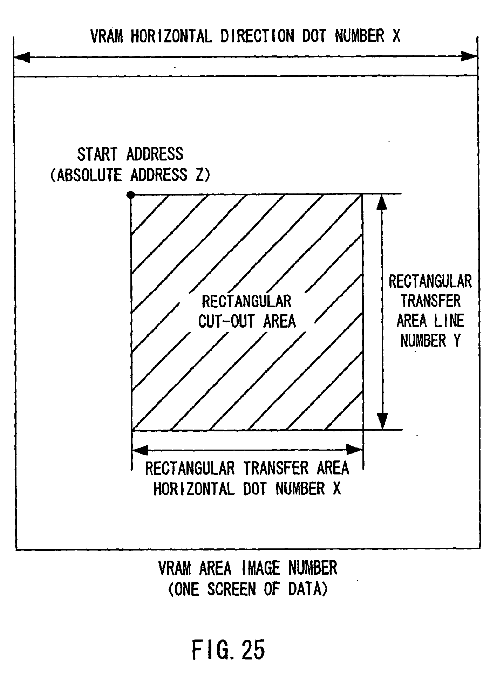

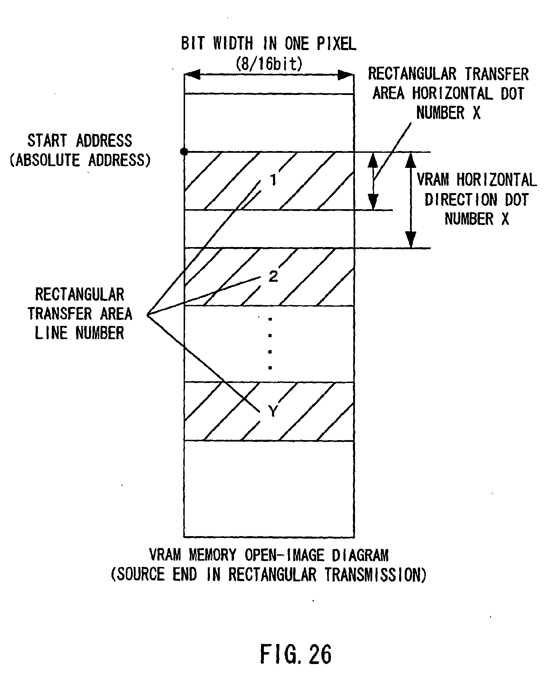

With respect to liquid crystal matter in a mobile phone and the like, there are cases where it is unnecessary to update the full-screen but where it suffices to update the screen only partially. FIG.25 illustrates a display screen in an image display apparatus in such case, and FIG.26 illustrates memory in an image display apparatus in such case.

A screen of image data is displayed from the upper left to lower right in FIG.25 following the order of raster scans. Data on raster scans is stored following the order of memory addresses. For example, when a cut-out picture to be displayed occupies the rectangular cut-out area in FIG.25, the data on this rectangular cut-out area will be written intermittently into the memory shown in FI.26.

By thus prescribing (setting) a start address Z, VRAM horizontal direction dot number XX, rectangular transfer area horizontal dot number X, and rectangular area line number Y, it is possible to autonomously calculate a memory address corresponding to the rectangular display to be updated, and to thus reduce the processing load on MPU 101.

### (Embodiment 15)

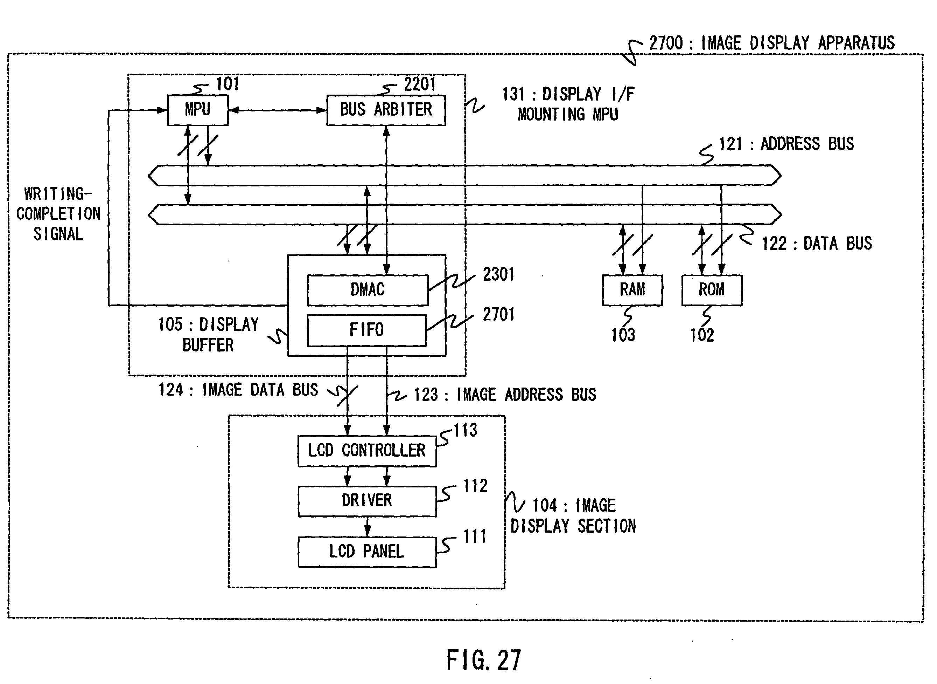

FIG.27 is a block diagram showing the configuration of an image display apparatus according to Embodiment 15 of the present invention. The sections that image display apparatus 2700 shown in FIG.27 has in common with image display apparatus 2300 shown in FIG.23 will be given the same numerals without further descriptions thereof.

In comparison with image display apparatus 2300 shown in FIG.23, image display apparatus 2700 shown in FIG.27 employs a configuration in which multi-staged FIFO section 2701 is added in display apparatus 105.

FIFO section 2701 temporarily stores the image data read out from RAM 103 and outputs the image data to LCD controller 113 on an FIFO (First-In-First-out) basis.

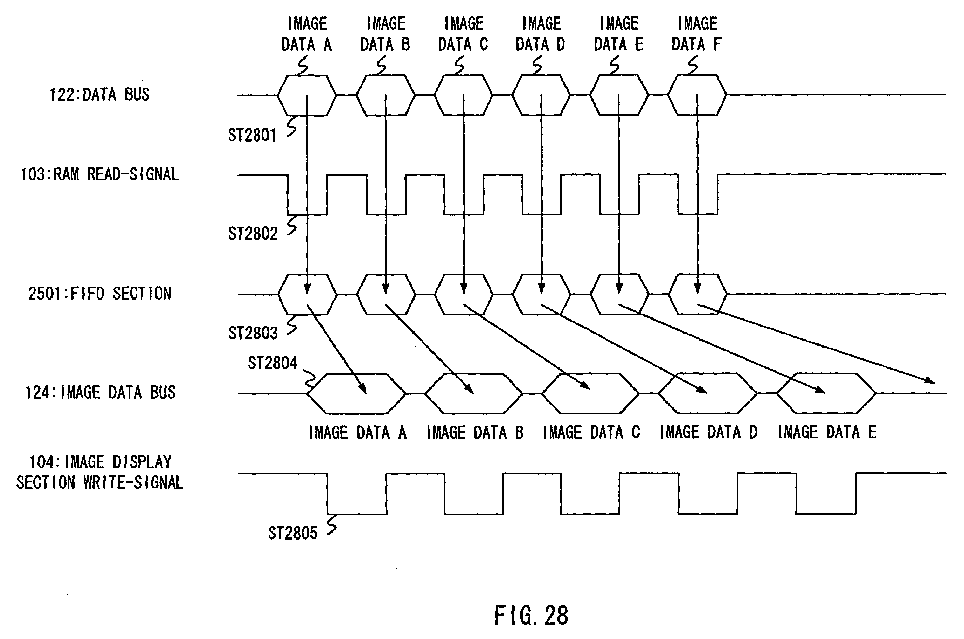

Next, the operation of image display apparatus 2700 shown in FIG.27 will be described with the timing diagram shown in FIG.28. FIG.28 illustrates a case where the time cycle (t1) by which the MPU busses read out image data from RAM 103 is longer than the time cycle (t2) by which display buffer 105 writes into LCD controller 113. In FIG.28, FIFO section 2701 is six-staged.

MPU 101 outputs a read-signal to ROM 102 via address bus 121 and reads out a program from ROM 102 via data bus 122. MPU 101 then produces image data based on the read program and stores the image data in RAM 103 via data bus 122.

To display image data on LCD panel 111 in image display section 104, DMAC 2301 outputs a read-signal to RAM 103 via address bus 121 and reads out image data A from RAM 103 on a t1 time cycle basis (ST 2801, ST 2802).

Image data A read out from RAM 103 is written into FIFO section 2701 in display buffer 105 via image data bus 124 (ST 2803).

Display buffer 105 writes the image data written into FIFO section 2701 into LCD controller 113 on a t2 time cycle basis (ST 2804, ST2805).

After this, image display apparatus 2700 repeats the operations of ST 2801∼ST 2805 with following image data B∼F.

By thus including FIFO section 2701 in display buffer 105, it is possible to absorb in FIFO 2701 the time differential between the time cycle by which the MPU busses read out image data from RAM 103 and the time cycle by which display buffer 105 writes into LCD controller 113, and this makes it possible to read out from RAM 103 to display buffer 105 without modifying the access speed of the MPU busses. Therefore, while the MPU busses read out image data to display buffer 105 at a high speed and display buffer 105 writes into LCD controller 113 at a low speed, MPU 101 is open to other processing, so that the processing load on MPU 101 can be reduced.

Generally speaking (in general), the access time of image data bus 124 lags compared to the access time of data bus 122. However, in FIG.27, by operating DMAC 2301 intermittently and by transferring DMA transmission units to all the data used in LCD display in a number of separate transmissions at regular intervals, it is possible to transfer the data intermittently on data bus 122, and that MPU 101 monopolizes data bus 122 for other processing during the open periods. By this means, the processing load due to image data transfer on MPU 101 as well as the bus traffic may be reduced.

### (Embodiment 16)

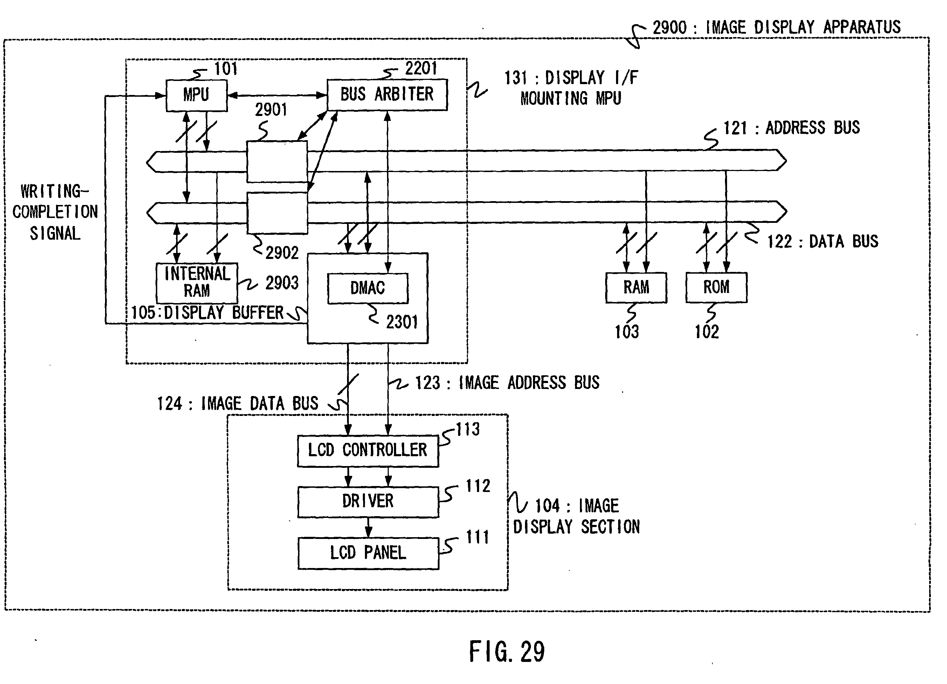

FIG.29 is a block diagram showing the configuration of an image display apparatus according to Embodiment 16 of the present invention. The sections that image display apparatus 2900 shown in FIG.29 has in common with image display apparatus 2300 shown in FIG.23 will be given the same numerals without further descriptions thereof.

In comparison with image display apparatus 2300 shown in FIG.23, image display apparatus 2900 shown in FIG.29 employs a configuration in which bus switch 2901 is added on address bus 121, bus switch 2902 is added on data bus 122, and internal RAM 2903 is added.

Bus arbiter 2201 controls over bus switch 2901 and bus switch 2902 and separate the busses. Hereinafter, drawing a line with bus switch 2901 and with bus switch 2902, the left half in FIG.29 will be referred to as the "inner busses," and the right half the "outer busses." It is when MPU 101 and display buffer 105 operate simultaneously and when, furthermore, MPU 101 performs processing on the inner busses and display buffer 105 performs processing on the outer busses, that the busses are separated by bus switch 2901 and bus switch 2902. An example is a case where MPU 101 implements the operation of RAM 2903, while display buffer 105 outputs the image data read out from RAM 103 to LCD controller 113.

By thus separating the busses it is possible to operate display buffer 105 and display on LCD panel 111 without halting the operation of MPU 101, and to thus enhance the processing performance of MPU 101.

### (Embodiment 17)

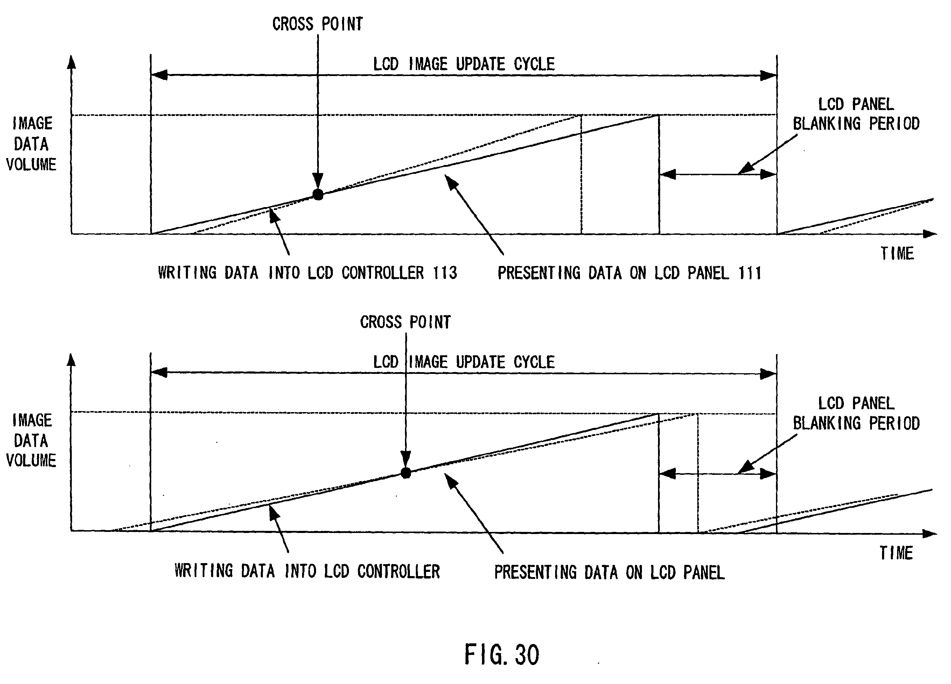

Now in a general TFT(Thin Film Transistor)-LCD, the writing of data into LCD controller 113 is performed in synch with the image update cycle of an LCD (50∼70Hz). In contrast to this, image presentation on an LCD panel is performed out of synch with the image update cycle of an LCD, that is, at a random timing. FIG.30 is a timing diagram illustrating the writing timing (solid line) of the data written into LCD controller 113 as well as the presentation timing (broken line) of the data presented on LCD panel 111, with time on the horizontal axis and data volume on the vertical axis. When a cross point occurs where two data volumes reverse as shown in FIG.30, the problem of a flicker on the display screen appears. A case to cope with this problem will be described with Embodiment 17 of the present invention.

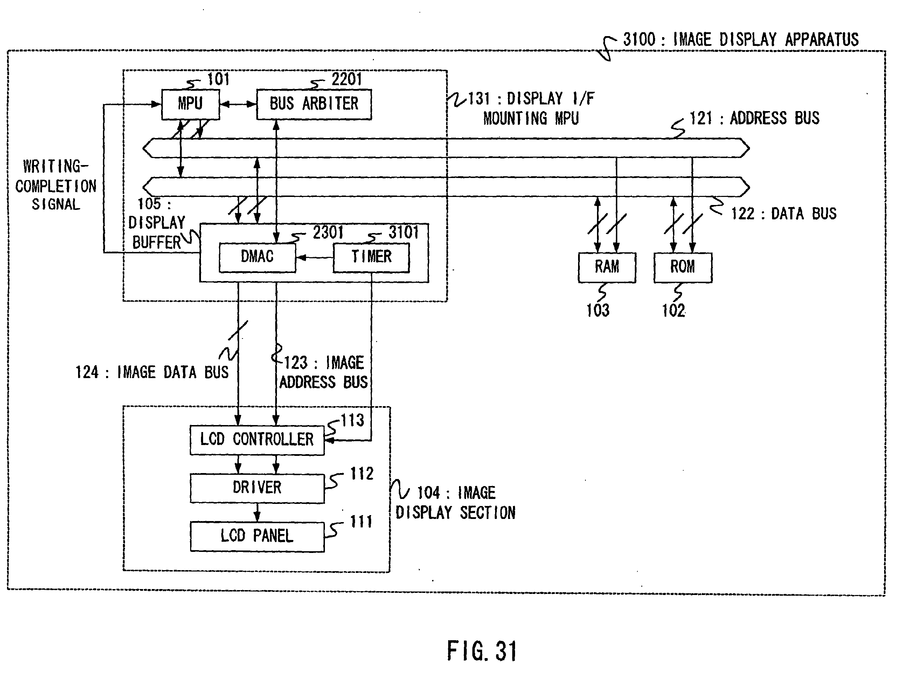

FIG.31 is a block diagram showing the configuration of an image display apparatus according to Embodiment 17 of the present invention. The sections that image display apparatus 3100 shown in FIG.31 has in common with image display apparatus 2300 shown in FIG.23 will be given the same numerals without further descriptions thereof.

In comparison with image display apparatus 2300 shown in FIG.23, image display apparatus 3100 shown in FIG.31 employs a configuration in which timer 3101 is added in display buffer 105.

Timer 3101 outputs a pulse signal to DMAC 2301 and LCD controller 113 by the image update cycle of the LCD. DMAC 2301 activates at the timing of this pulse signal, and LCD controller 113 updates the image on LCD panel 111 by the image update cycle of the LCD.

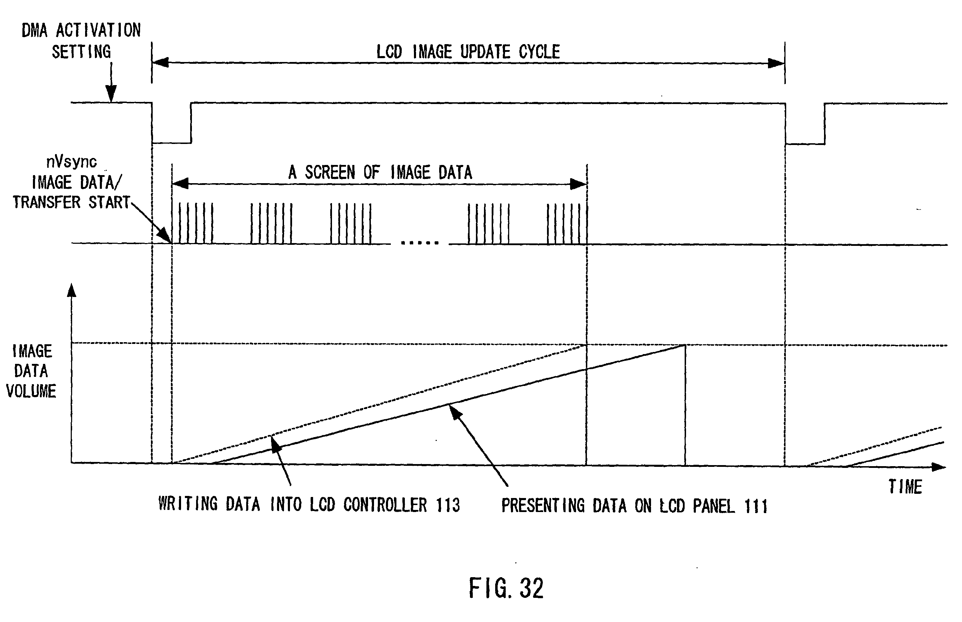

Next, the operation of image display apparatus 3100 shown in FIG.31 will be described with the timing diagram shown in FIG.32. In FIG.32, a pulse signal Vsync is output from timer 3101 to DMAC 2301 and to LCD controller 113 by the image update cycle of the LCD.

Upon receiving the pulse signal Vsync, DMAC 2301 transfers one screen of image data to LCD controller 113. The broken line in FIG.32 shows the relationship between time (vertical line) and the volume of the data written into LCD controller 113 (horizontal line). Also, the solid line in FIG.32 shows the relationship between time (horizontal line) and the volume of the image data presented on LCD panel 111 (vertical line).

By thus transferring image data from display buffer 105 to LCD controller 113 in synch with the image update cycle of the LCD, it is possible to prevent a cross point from occurring, so that a flicker on the screen can be prevented. Also, with the present embodiment, timer 3101 is disposed inside display buffer 105, and LCD controller 113 in image display section 104 receives a pulse signal. However, a configuration in which a timer is disposed in image display section 104 and DMAC 2301 inside display buffer 105 receives a pulse signal may be good as well.

### (Embodiment 18)

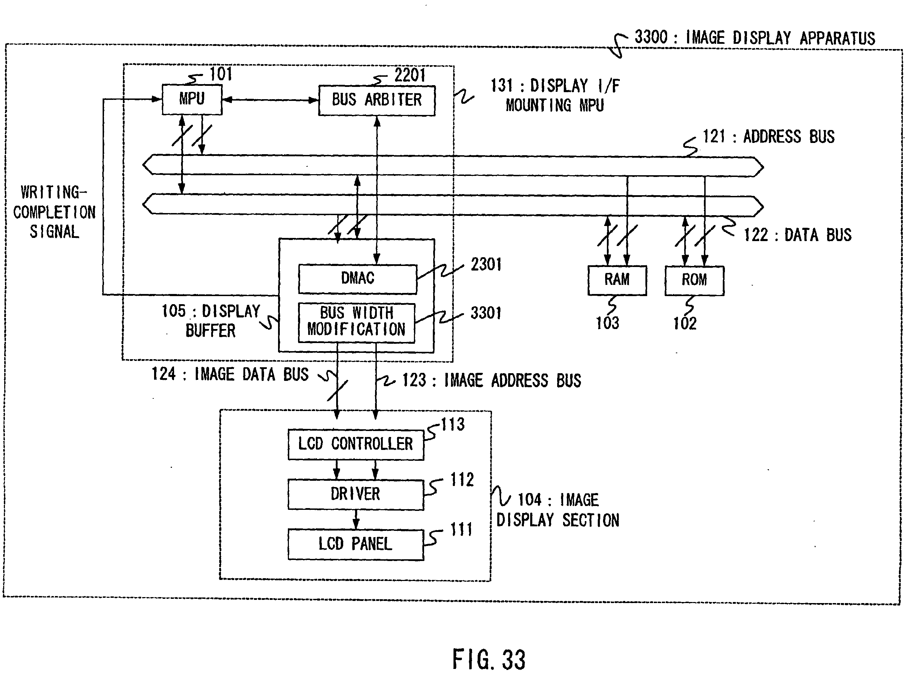

FIG.33 is a block diagram showing the configuration of an image display apparatus according to Embodiment 18 of the present invention. The sections that image display apparatus 3300 shown in FIG.33 has in common with image display apparatus 2300 shown in FIG.23 will be given the same numerals without further descriptions thereof.

In comparison with image display apparatus 2300 shown in FIG.23, image display apparatus 3300 shown in FIG.33 employs a configuration in which bus width modifying section 3301 is added in display buffer 105.

When the bus width of data bus 122 and the bus width of image data bus 124 differ, bus width modifying section 3301 modifies the alignment of the image data that arrives through data bus 122 and outputs the image data to image data bus 124.

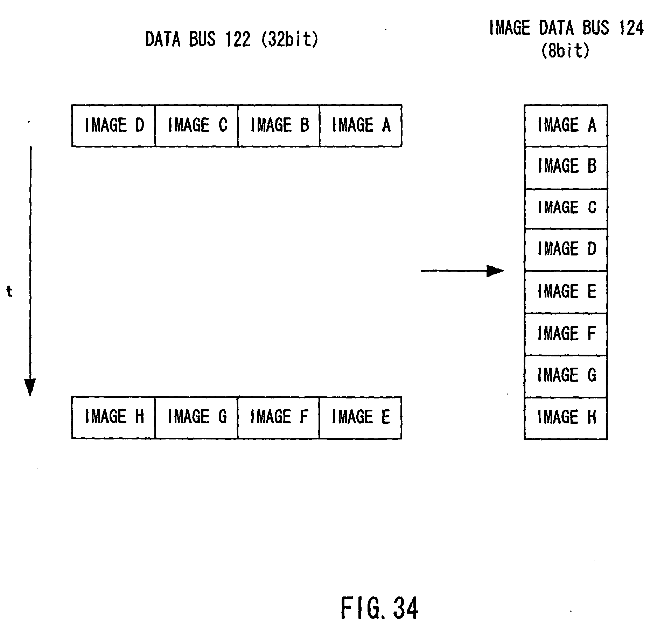

FIG.34 is a drawing to describe a modification in an alignment of image data by bus width modifying section 3301. On the premise that, in FIG.34, the bus width of data bus 122 is 32 bits, the bus width of image data bus 124 is 8 bits, and image data with pixels each d represented with 8 bits (256 colors) is displayed. In this case, 4 pixels (A∼D, E∼H) of image data is transferred from RAM 103 to display buffer 105 on and via data bus 122 by one access. Bus width modifying section 3301 modifies the alignment of the image data transferred to display buffer 105 and transfers the image data to LCD controller 113 on a per pixel basis via data bus 124.

By this means it is possible to make the bus width of data bus 122 bigger than the bus width of image data bus 124, and transfer a number of pixels of image data at one time, and to thus reduce the processing load on MPU 101.

### (Embodiment 19)

Generally, the bit width in the internal memory in MPU 101 is 8×2n-1bit (n is a natural number), such as 8 bits, 16 bits, and 32 bits, and by thus carrying image data in these bit-width units, memory can be used with efficiency. However, if an LCD is capable of displaying 18 bits (RGB=666), the bit width in the internal memory in MPU needs to be 32 bits, and 14 bits out of these 32 bits are of no use. Embodiment 19 will describe a case that copes with this problem.

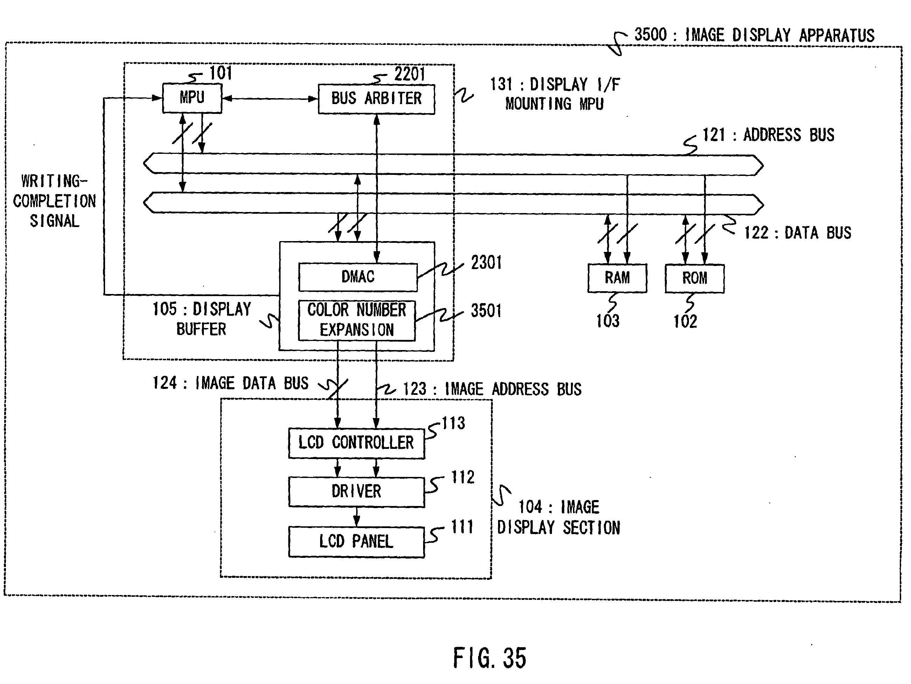

FIG.35 is a block diagram showing the configuration of an image display apparatus according to Embodiment 19 of the present invention. The sections that image display apparatus 3500 shown in FIG.35 has in common with image display apparatus 2300 shown in FIG.23 will be given the same numerals without further descriptions thereof.

In comparison with image display apparatus 2300 shown in FIG.23, image display apparatus 3500 shown in FIG.35 employs a configuration in which color number expanding section 3501 is added in display buffer 105.

Color number expanding section 3501 performs bit expansion processing on the image data transferred to display buffer 105 in accordance with the display capacity of the LCD.

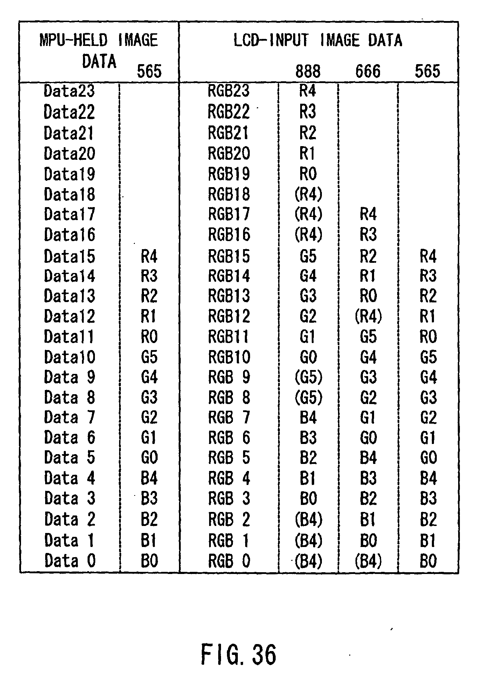

FIG.36 is a diagram that shows correspondence between the numbers of colors in the MPU-held image data and LCD-input image data. On the premise that, in FIG.36, the data held by the internal memory in MPU 101 is 16 bits (RGB=565) and the LCD is capable of displaying 18 bits, color number expanding section 3101 performs bit expansion on the image data transferred to display buffer 105 in accordance with "666" in the LCD input image data in FIG.36. Incidentally, FIG.36 shows a sample case of expansion where the LCD is capable of displaying 24 bits (RGB=888).

By this means, for instance when the LCD is capable of displaying 18 bits, one pixel of data can be produced by expanding 16-bit data. As a result, it becomes unnecessary to expand the image data range of the MPU to 32 bits or the like, and the volume of the internal memory in MPU 101 can be reduced. Furthermore, mounting a display buffer according to the present invention may result in heightening the versatility of the apparatus for the LCDs of various color numbers.

### (Embodiment 20)

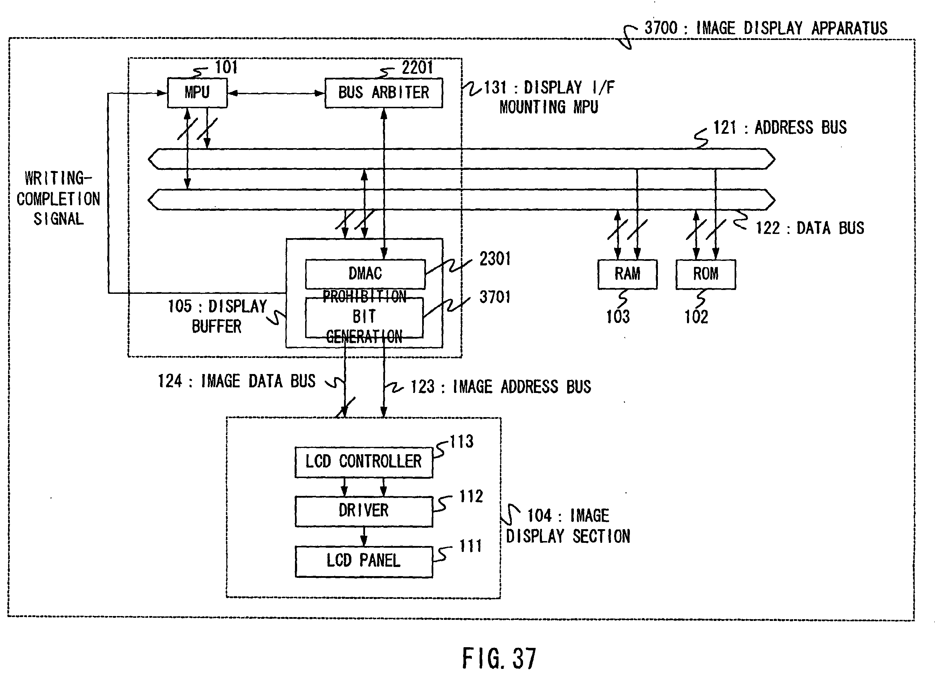

FIG.37 is a block diagram showing the configuration of an image display apparatus according to Embodiment 20 of the present invention. The sections that image display apparatus 3700 shown in FIG.37 has in common with image display apparatus 2300 shown in FIG.23 will be given the same numerals without further descriptions thereof.

In comparison with image display apparatus 2300 shown in FIG.23, image display apparatus 3700 shown in FIG.37 employs a configuration in which prohibition bit generating section 3701 is added inside display buffer 105. LCD controller 113 is a type with a prohibition bit input, and prohibition bit generating section 3701, following the instructions from MPU 101, generates prohibition bits that prohibit the update with respect to the areas where the display screen is not updated, and outputs the prohibition bits to LCD controller 113.

Here, as described with Embodiment 19, generally the bit width in the internal memory in MPU 101 is 8×2n-1bit(n is a natural number), such as 8 bits, 16 bits, and 32 bits. For instance, in image data with one pixel being 16 bits, if the complete 16 bits are used for color presentation, 65536 colors can be presented. However, if one bit is used as a prohibition bit, only 15 bits become available for color presentation with 32768 colors to be presented.

To avoid this, prohibition bit generating section 3701 sets one specific color available as a prohibition bit (hereinafter "specified color"). LCD controller 113 performs the processing that converts a detected specified color into a prohibition bit, and does not update the specified areas on the display screen.

By thus using only one color as a specified color it is possible to present nearly the same number of colors as when the complete bits are used for color presentation, besides generating prohibition bits. For instance, with image data with each pixel being 16 bits, 65535 colors can be presented, which is minus one color from 65536 colors as in the case that the complete 16 bits are used for color presentation. It is thus made possible to reduce the volume of the internal memory in MPU 101 without impairing the quality on the display screen.

### (Embodiment 21)

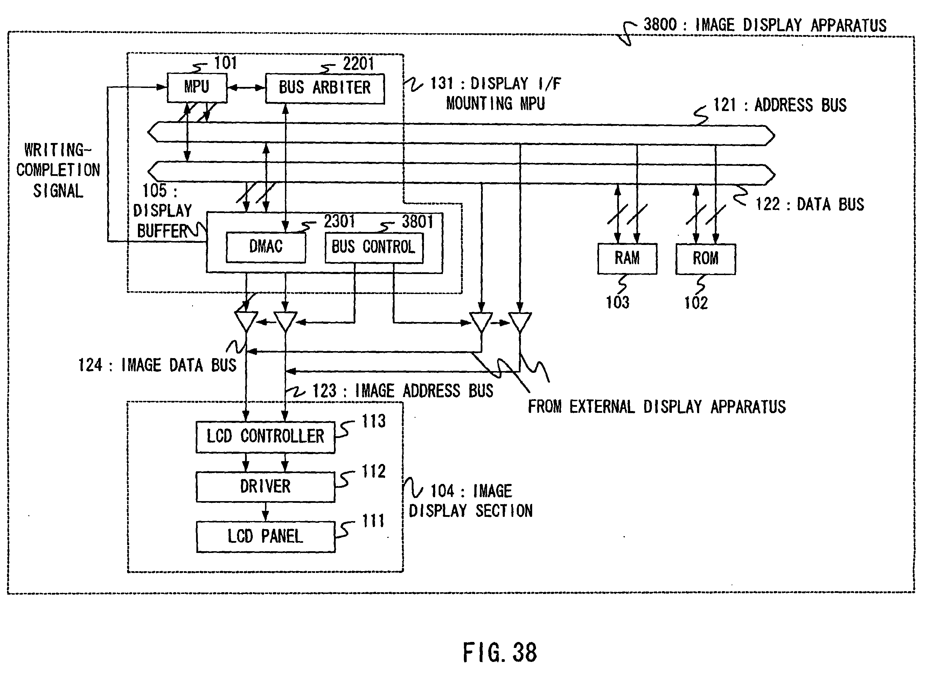

FIG.38 is a block diagram showing the configuration of an image display apparatus according to Embodiment 21 of the present invention. The sections that image display apparatus 3800 shown in FIG.38 has in common with image display apparatus 2300 shown in FIG.23 will be given the same numerals without further descriptions thereof.

In comparison with image display apparatus 2300 shown in FIG.23, image display apparatus 3800 shown in FIG.38 employs a configuration in which bus control section 3801 is added inside display buffer 105. Furthermore, the image data output from display buffer 105 is made into a tri-state (three-state) form, and image display apparatus 3800 is made bus-connectable to an external image display apparatus.

By making the image display apparatus bus-connectable to an external display apparatus, it is possible to add to image display section 104 a number of blocks that transfer image data. As a result, it is possible, for instance, to connect the blocks that process or display moving images in parallel and heighten the expandability of the apparatus.

However, there are cases where either the display image from display buffer 105 or the display image from an external display apparatus drops when the two images superpose. To solve this problem, upon receiving an image output request signal from display buffer 105 or from an external display apparatus, bus control section 3801 determines the presence/absence of a valid signal that indicates that data transmission is in progress, and in case there is no valid signal, that is to say, only in case no image data is transferred to image display section 104 from other sources, allows to open up the display busses.

As apparent from the above description, according to the present invention, it is possible to output image data from a buffer that stores the image data on liquid crystal matter on a temporary basis to a liquid crystal matter using routes other than the MPU busses, and to thus reduce the traffic from the MPU to liquid crystal matter by relatively simple additions of functions such as a buffer, decoder, and the like. In addition, according to the present invention, by using the memory on liquid crystal matter for graphic combination, it is possible to present a large-volume of image data such as moving images by relatively simple additions of functions.

This application is based on the Japanese Patent Application No.2000-327261 filed on October 26, 2000, and Japanese patent application No. 2001-188725 filed on June 21, 2001, entire content of which is expressly incorporated by reference herein.

### Industrial Applicability

The present invention is suited for use in radio communication terminal apparatus and cellular phones that display images on liquid crystal matter.

## Claims

1. An image display apparatus comprising:
a holding section that stores image data;
a display section that displays image data; and
an image-only bus that connects said holding section and display section, said holding section writing image data on liquid crystal matter via said image-only bus.

2. An image display apparatus comprising:
an image presentation control section that produces image data and controls image presentation of an image,
a first holding section that receives the image data from said image presentation control section via a first bus and holds the image data,
a display section that displays the image data, and
a second holding section that, after temporarily storing the image data input from said first holding section via the first bus, outputs the image data to said display section via a second bus in accordance with an instruction from said image presentation control section.

3. The image display apparatus according to claim 2, wherein said second holding section, when the data width in said display section is less than half the width of the first bus, divides up and outputs the received image data to said display section.

4. The image display apparatus according to claim 2, further comprising:
a color subtracting section that performs color subtracting processing for setting the image data output from said first holding section to a bit width required to be displayed on said display section, and outputs the image data after the color subtracting processing to said second holding section via the first bus.

5. The image display apparatus according to claim 2, further comprising:
a converting section that converts a signal, which is from said image presentation control section to said first holding section instructing to output image data, into a signal instructing to the effect of writing on said display section, and wherein,
said second holding section receives the image data output from said first holding section in accordance with the signal converted in said converting section.

6. The image display apparatus according to claim 2, wherein said image presentation control section and second holding section are configured into one chip.

7. An image display apparatus comprising:
an image presentation control section that produces image data and controls image presentation of images,
a first holding section that connects with said image presentation control section via a first bus and holds the image data,
a display section that connects with said image presentation control section and first holding section via the first bus and displays the image data, and
a timing generating section that writes the image data output from said first holding section on said display section via said first bus in accordance with a signal from said image presentation control section to first holding section instructing to output image data.

8. The image display apparatus according to claim 6, wherein said image presentation control section and timing generating section are configured into one chip.

9. An image display apparatus comprising:
an image presentation control section that produces image data and controls image presentation of images,
a first holding section that connects with said image presentation control section via a first bus and holds the image data,
a display section that connects with said first holding section via a second bus and displays the image data, and
a display control section that controls such that said display section outputs the image data from said first holding section to said display section via the second bus in accordance with a signal from said image presentation control section instructing to output image data.

10. An image display apparatus comprising:
an image de/coding section that decodes coded image data, and
a display section that combines the image data stored in mounted internal memory and the image data output from said image de/coding section and displays the image data on liquid crystal matter.

11. An image display apparatus comprising:
an image presentation control section that produces image data and controls image presentation of images,
a first holding section that connects with said image presentation control section via a first bus and holds the image data,
a display section that displays the image data, and
an image de/coding section that, after temporarily storing the coded image data input via the first bus, decodes the coded image data in accordance with an instruction from said image presentation control section, and outputs the image data to said display section via the second bus.

12. The image display apparatus according to claim 11, further comprising:
a second holding section that temporarily stores non-coded image data input via the first bus, and
an image data switching section that makes either one of said second holding section or image de/coding section via the second bus output to display section in accordance with an instruction from said image presentation control section.

13. The image display apparatus according to claim 11, further comprising:
a timing generating section that writes the image data output from said first holding section on said display section via said first bus, in accordance with the signals from said image presentation control section to first holding section instructing to output image data, and
an image data switching section that makes said display section output from either one of said first holding section or image de/coding section via the second bus in accordance with an instruction from said image presentation control section.

14. The image display apparatus according to claim 12, wherein the power supply and clock signal supplied to said image de/coding section are halted while no image data is output from said image de/coding section.

15. The image display apparatus according to claim 11, wherein said image de/coding section decodes only the image data for a specific area that varies from previously displayed image data and outputs the image data to said display section, and said display section displays by way of writing the image data for the specific area over previously displayed image data.

16. The image display apparatus according to claim 11, wherein said image de/coding section outputs to said display section a prohibition bit that prohibits to update image data with respect to teh area that does not vary from previously displayed image data, and said display section displays the previously displayed image data with respect to the area specified by the prohibition bit.

17. The image display apparatus according to claim 16, wherein said image de/coding section outputs to said display section an update allowing bit that indicates as to whether or not the updating of a prohibition bit should be allowed, and said display section, when an update allowing bit to the effect of disallowing the updating of a prohibition bit is input, displays previously displayed image data with respect to the area specified by the prohibition bit that said display section holds.

18. The image display section according to claim 11, wherein said image de/coding section outputs to said display section update prohibiting image data that prohibits predetermined updating with respect to the area that does not vary from previously displayed image data, and said display section displays previously displayed image data with respect to the area specified by the update prohibiting image data.

19. The image display apparatus according to claim 11, wherein said image de/coding section decodes image data in synch with a synchronization signal and outputs the image data to said display section via the second bus.

20. An image display apparatus comprising:
a first image presentation control section that produces image data and controls image presentation of images,
a second image presentation control section that autonomously controls image presentation independent of said first image presentation control section,
a first holding section that receives the image data from said first image presentation control section via a first bus and holds the image data,
a display section that displays the image data, and
a second holding section that, after temporarily storing the image data input from said first holding section via the first bus in accordance with the control by said second image presentation control section, outputs the image data to said display section via the second bus.

21. The image display apparatus according to claim 20, further comprising:
an arbitrating section that arbitrates such that, when there is a request to use the first bus from both said first image presentation control section and second image presentation control section at the same time, the right to use the first bus is given to said second image presentation control section.

22. The image display apparatus according to claim 20, further comprising:
a bus switch that connects/disconnects the first bus, and
an arbitrating section that, when there is a request to use the first bus from both said first image presentation control section and second image presentation control section at the same time, disconnects said bus switch.

23. The image display apparatus according to claim 20, wherein said second image presentation control section is disposed inside said second holding section.

24. The image display apparatus according to claim 20, wherein said second image presentation control section controls such that only the image data that is to be updated is transferred from said first holding section to said second holding section.

25. The image display apparatus according to claim 20, wherein said second holding section outputs the image data received from said first holding section to said display section on an FIFO (First-In-First-Out) basis.

26. The image display apparatus according to claim 25, wherein said second image presentation control section controls such that image data is transferred from said first holding section to second holding section in a number of transmissions at regular intervals.

27. The image display apparatus according to claim 20, wherein said second holding section transfers image data to said display section in synch with the image updating cycle in said display section.

28. The image display apparatus according to claim 20, wherein, in case the bus width of the first bus and the bus width of the second bus differ, the data that arrives on the first bus is modified in its alignment and then output to the second bus.

29. The image display apparatus according to claim 20, wherein said second holding section performs bit expansion processing upon the transferred image data in correspondence with the display capacity of said display section.

30. The image display apparatus according to claim 20, wherein said second holding section fixes one specific color as a specified color available for a prohibition bit, and said display section performs processing, which transforms a detected specified color into a prohibition bit, and does not update the display screen in the area specified by the prohibition bit.

31. The image display apparatus according to claim 2, further comprising:
a bus control section that, upon receiving a signal that requests image be output from said second holding section and external display apparatus, allows the second bus to open up to the transmitting source of the signal.

32. A communication terminal apparatus having an image display apparatus, said image display apparatus comprising:
a holding section that stores image data,
a display section that displays images, and
an image-only bus that connects said holding section and said display section, said holding section writing image data on said liquid crystal matter via said image-only bus.

33. A mobile phone apparatus having an image display apparatus, said image display apparatus comprising:
a holding section that stores image data,
a display section that displays images, and
an image-only bus that connects said holding section and said display section, said holding section writing image data on said liquid crystal matter via said image-only bus.

34. An image data display method wherein an image-only bus is disposed and connects a buffer that stores image data and liquid crystal matter that displays image data , and wherein image data is written from said buffer on said liquid crystal matter via the image-only bus and displayed on said liquid crystal matter.

35. An image display method wherein coded image data is decoded and the decoded image data is combined with the image data stored in the memory on liquid crystal matter and displayed on liquid crystal matter.
